Europäisches Patentamt

European Patent Office

Office européen des brevets

(19)

(11) Publication number: **0 254 435 B1**

(12) # EUROPEAN PATENT SPECIFICATION

(45) Date of publication of patent specification: **20.05.92**  (51) Int. Cl.⁵: **B60R 1/12**, B60Q 3/02

(21) Application number: **87305740.0**

(22) Date of filing: **26.06.87**

(54) Case assembly for a rearview mirror.

(30) Priority: **26.06.86 US 879158**

(43) Date of publication of application:
**27.01.88 Bulletin  88/04**

(45) Publication of the grant of the patent:
**20.05.92 Bulletin  92/21**

(84) Designated Contracting States:
**DE ES FR GB IT SE**

(56) References cited:
**EP-A- 0 165 817
DE-A- 3 218 184
DE-A- 3 311 140
DE-U- 7 323 996
US-A- 3 543 018**

(73) Proprietor: **DONNELLY CORPORATION
414 East Fortieth Street
Holland Michigan 49423(US)**

(72) Inventor: **Skogler, Brian Ivar
18777 Fruitport Road
Spring Lake Michigan 49456(US)**
Inventor: **Schofield, Kenneth
685 Marylane Drive
Holland Michigan 49423(US)**
Inventor: **Lantz, William Purdum
780 South Shore Drive
Holland Michigan 49423(US)**
Inventor: **Nyhof, Eldon Jay
50-76th Avenue
Zeeland Michigan 49464(US)**
Inventor: **Helder, Dorothy J. Ebeling
19 East Thirty-Fourth Street
Holland Michigan 49423(US)**
Inventor: **Flowerday, Charles Max
32 East Twenty-Fifth Street
Holland Michigan 49423(US)**

(74) Representative: **Robinson, Anthony John
Metcalf et al
Kilburn & Strode 30 John Street
London, WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

This invention relates to rearview mirror assemblies for vehicles and, in a particular example, to a rearview mirror case assembly which provides lights for illuminating selected portions of the vehicle interior in which the assembly is mounted or displays various types of information and includes controls mounted within the assembly for providing such information.

EP-A-0165817 describes a rearview mirror and light assembly for a vehicle having a back housing and a mirror case. The housing is secured to the back of the mirror case with screws. The housing has downwardly facing openings which have light directing lenses which are positioned under lights supported on the housing. The lights are secured to a back which is screwed on to the mirror case.

Various types of rearview mirror assemblies including lights or information providing units therein have been used in the past. One such structure includes a housing secured to the back of a rearview mirror case and having a pair of light assemblies mounted on the housing for insertion into the case through openings in the case back such that the light is directed downwardly of the assembly from the spaced lights. The lighting provided was appropriate for low level interior courtesy lighting for the front passenger area of a vehicle. The housing of this prior mirror assembly wrapped around the case back to the bottom of the case and was, in part, visible by the driver of the vehicle. Moreover, adaptability of this assembly to provide various types of lights or support for other controls or information display units desired for use within the vehicle was difficult because of space limitations and the required attachment structure for the housing.

The above prior mirror assembly also revealed a need to incorporate the support of the light units more wholly within the mirror case so as to integrate them more pleasingly with the overall mirror design. Coupled with such desire was a need to provide improved lighting which could not only provide general light level communication within the vehicle, but also provide specific targeted light areas for use in illumination of the console between the front seats of a vehicle, for map reading in the front seats by the driver or front passenger, and would also provide increased light intensity over prior known structures. In addition, a mirror assembly was desired which would reduce as much as possible any glare visible by the vehicle driver and prevent the visibility by the driver of any light source from the light assemblies within the structure.

The present invention was conceived as a solution for and an improvement over the above and other design limitations of prior known lighted rearview mirror structures. It was also conceived as a means for providing a basic structure which could be interchangeably fitted with various types of lights, instruments, or controls of an electronic or other nature by making relatively minor part substitutions which could be fitted within the basic mirror assembly to accommodate various vehicle designs and design concepts. To this end, a case assembly for a vehicular rearview mirror in accordance with the present invention is characterised by the features specified in the characterising portion of claim 1.

Accordingly, the present invention provides the case assembly for vehicular rearview mirrors adapted to support lights for illuminating portions of the vehicle interior, instruments such as directional compasses or the like, sensing units to provide information concerning engine or vehicle operation parameters, or other controls such as switches or instrument adjustment units. The basic case assembly may be interchangeably fitted with a variety of carrier modules having different combinations of lights, switches, instrument controls and the like.

In one form, the invention is a case assembly for a vehicular rearview mirror including a mirror case having a back, a peripheral sidewall defining a front opening adapted to receive a mirror element, the peripheral sidewall including top, bottom and end wall portions and a back spaced from the front opening to define an interior space within the case. Means are provided for mounting a case on a support. An opening in the bottom wall portion receives carrier means supporting a light, a control, an instrument or the like within said interior space, the carrier means including a rigid support and mounting means for mounting the support within the opening such that the support is generally flush with the exterior of the bottom wall portion.

Preferably, the carrier means is a carrier module supporting one or two lights, a light and an electrical switch, or a control unit for controlling the operation of an instrument such as a directional compass, sensing unit or the like wherein a control element extends from the carrier module for access from the bottom of the case assembly.

In another form of the invention, a pair of the carrier modules are secured within the bottom wall of the mirror case on either side of a central securing means for mounting the case on a support. Each module may include a light assembly and a switch. In another combination, one of the carrier modules may include a pair of lights while the other carrier module may include either a light assembly with a switch or control means for adjusting and controlling the operation of an instrument such as a directional compass. Thus, the present invention provides design flexibility via interchangeable carrier modules which may be substituted for one another to provide varying features with the basic mirror assembly as desired by manufacturers and customers.

In yet another aspect of the invention, the invention includes a case assembly with a mirror case having means for receiving a mirror element, a case back, a peripheral sidewall having lateral ends and means for supporting the assembly in a vehicle. Lighting means are included for illuminating areas adjacent the assembly along with support means for supporting lighting means on the mirror case. Light directing means are included for directing light from the lighting means to illuminate first and second areas below and outwardly of either lateral end of the case with a first amount of light. Each of the first and second areas includes a targeted area of brighter, more intense light therewithin. The targeted areas are directed and positioned such that they generally illuminate the lap areas of persons seated in the front seats of a vehicle with the case assembly mounted in a normal driver viewing position generally above the instrument panel of the vehicle.

Preferred forms of the invention may include various types of light assemblies including a lamp socket, a parabolic reflector for directing light from the socket, an electric lamp, a lens mounted below the lamp socket, reflector and lamp for directing the light, and removal means accessible from the bottom of the case assembly for allowing removal of the carrier modules from their openings.

The present invention provides numerous advantages over prior known lighted or instrument carrying rearview mirror assemblies. First, the assembly provides significant design flexibility due to the interchangeability of various carrier modules which can support varying types of instruments including light assemblies, switches, control units and the like to provide illumination within the vehicle or control of instruments having readouts displayed on the assembly. In addition, the invention provides improved lighting which may not only be directed to diverging areas to properly illuminate the lap areas of the driver and passenger in the front of a vehicle for map reading or the like, but also to illuminate the console area between the front seats. The lights may be controlled from the mirror assembly itself and/or from the instrument panel of the vehicle. The invention also provides improved light intensity which may be specifically directed with included lens designs.

The interchangeability of the carrier modules enables the basic case assembly to be used for various types of vehicles with alternate carrier modules simply substituted in the bottom openings of the case assembly to modify the case to include various types of instruments, lights or the like. In addition, safety and vision for drivers is improved since the invention prevents any light from directly entering a driver's field of view while properly directing the light to desired areas. This results in decreased glare and increased contrast for the driver's eyes thereby providing better night vision. Further, the overall styling and appearance of the rearview mirror case assembly is significantly improved by the integration of the carrier modules such that they are mounted generally flush with the bottom wall of the case and are essentially hidden from view when the mirror is viewed from the normal driving position.

According to the present invention, a case assembly for a vehicle rearview mirror is characterised by a mirror case having a back and a peripheral sidewall defining a front opening adapted to receive a mirror element, the peripheral sidewall including top, bottom and end wall portions, the back being spaced from the front opening to define an interior space within the case; means for mounting the case to a support; an opening in the bottom wall portion; carrier means including a rigid support, and mounting means for mounting the support within the opening such that the support is generally flush with the exterior of the bottom wall portion. The carrier means may be adapted for supporting a light, a control, an instrument or the like within the interior space.

The support may be arranged to include first and second light assemblies having first and second lamps. The first lamp may be brighter than the second lamp. The support may include a control unit, desirably for controlling the operation of an instrument such as a directional compass, a sensing unit or the like adapted to be mounted within the case.

The control unit may be arranged to control a directional compass means. Preferably, the control unit comprises a rheostat or a potentiometer.

The light assembly may include a parabolic reflector and a lamp including a filament, the lamp being positioned such that the filament is located generally at the focal point of the parabolic reflector.

According to a second aspect of the invention, a case assembly for a vehicular rearview mirror is characterised by a mirror case having a back and a peripheral sidewall defining a front opening adapted to receive a mirror element, the peripheral sidewall including top, bottom and end wall portions, the back wall being spaced from the front opening to define an interior space within the case; securing means for mounting the case to a support; a pair of openings in the bottom wall portion, a carrier module received in each of the openings, each carrier module configured to the shape of the opening such that it generally fills the opening in which it is received and including a body, mounting means for mounting the body within the respective opening, support means for supporting a light, a control, or an instrument on the body and projecting into the interior space, and removal means accessible from the bottom of the case assembly for allowing removal of the carrier module from the opening and the bottom wall portion for access to the light, control or instrument when the module is removed. Preferably, the securing means are generally at the centre of the case back, with one opening on either side thereof.

According to a third aspect of the invention, a case assembly for a vehicular rearview mirror is characterised by a mirror case having means for receiving a mirror element, a case back, a peripheral sidewall including lateral ends, and means for supporting the assembly in a vehicle; lighting means for illuminating areas adjacent the assembly; support means for supporting the lighting means on the mirror case; and light-directing means for directing light from the lighting means to illuminate an area below and outwardly of one lateral end of the case with a predetermined amount of light, the area including a smaller, targeted area of brighter, more intense light therewithin, the targeted area being directed and positioned generally to illuminate the lap area of a person seated in a front seat of a vehicle with the case assembly mounted in normal driver viewing position generally above the instrument panel of the vehicle.

The invention may be carried into practice in a number of ways and three specific embodiments will now be described, with reference to the drawings, in which:

Figure 1 is a perspective view of a first embodiment of a lighted rearview mirror assembly incorporating the present invention;

Figure 2 is a front elevation of the rearview mirror assembly of Figure 1 with the mirror element and front retaining bezel removed;

Figure 3 is a bottom view of the rearview mirror assembly of Figure 1;

Figure 4 is a side elevation of the rearview mirror assembly of Figures 1 and 3;

Figure 5 is an exploded, perspective view of the rearview mirror assembly of Figures 1 to 4;

Figure 6 is a front elevation of the left half of the mirror case of the mirror assembly of Figures 1 to 5;

Figure 7 is a bottom view of the right half of the mirror case shown in Figure 6;

Figure 8 is a top plan view taken from the interior side of a first embodiment of a carrier module for the present invention;

Figure 9 is a side elevation of the carrier module of Figure 8;

Figure 10 is an end elevation of the carrier module of Figures 8 and 9;

Figure 11 is a sectional view of the carrier module of Figures 8-10 taken along line XI-XI of Figure 8;

Figure 12 is a sectional view of another portion of the carrier module of Figure 8 taken along line XII-XII of Figure 8;

Figure 13 is a sectional view of another portion of the carrier module of Figure 8 taken along line XIII-XIII of Figure 8;

Figure 14 is a sectional side elevation of a light socket assembly adapted for mounting on the carrier module of Figures 8 to 13;

Figure 15 is a top plan view of the light socket assembly of Figure 14;

Figure 16 is a side elevation of a parabolic reflector to be received within the light socket assembly of Figures 14 and 15;

Figure 17 is a layout of the sheet metal stamping from which the parabolic reflector of Figure 16 is formed by bending;

Figure 18 is a schematic plan view of the front sheet areas of a typical vehicle showing the lighted areas provided by the lighted rearview mirror assembly of Figures 1 to 5;

Figure 19 is a schematic side elevation of the lighted areas of the front seat area of a typical vehicle provided by the rearview mirror assembly of Figures 1 to 5;

Figure 20 is a bottom view of a second embodiment of the lighted rearview mirror of the present invention;

Figure 21 is an exploded perspective view of the rearview mirror assembly of Figure 20;

Figure 22 is a bottom plan view of the left carrier module of the assembly of Figure 20;

Figure 23 is a top plan view of the carrier module of Figure 22;

Figure 24 is an end elevation of the carrier module of Figures 22 and 23;

Figure 25 is a side sectional view of the carrier module including a light socket thereon and with a reflector, lens and switch mounted on the carrier module of Figures 22 to 24;

Figure 26 is a top plan view of the right hand carrier module of the rearview mirror assembly of Figure 20;

Figure 27 is a bottom plan view of the carrier module of Figure 26;

Figure 28 is an end elevation of the carrier module of Figures 26 and 27;

Figure 29 is a side sectional view of the carrier module of Figures 26 to 28 assembled with a reflector, lenses and lens holder;

Figure 30 is a bottom plan view of the left hand lens used with the rearview mirror assemblies of Figures 1 to 5 and 20 to 25;

Figure 31 is a sectional end view of the lens of Figure 30 taken along line XXXI-XXXI of Figure 30;

Figure 32 is a sectional side view of the lens of Figure 30 taken along line XXXII-XXXII of Figure 30;

Figure 33 is a bottom plan view of the right hand lens used with the rearview mirror assembly of Figures 1 to 5;

Figure 34 is an end section of the lens taken along line XXXIV-XXXIV of Figure 33;

Figure 35 is a partial side section of the lens taken along line XXXV-XXXV of Figure 33;

Figure 36 is a sectional end view of an alternative lens for use with the right hand carrier module of the rearview mirror assembly of Figures 20 and 21;

Figure 37 is a sectional side view of the alternative lens of Figure 36;

Figure 38 is a plan view of a lens holder for the second light assembly on the right hand carrier module of the rearview mirror assembly of Figures 20 and 21;

Figure 39 is a side elevation of the lens holder of Figure 38;

Figure 40 is a plan view of a lens used with the lens holder of figures 38 and 39;

Figure 41 is a side sectional view of the lens of Figure 40 taken along line XLI-XLI of Figure 40;

Figure 42 is a bottom plan view of an alternative third carrier module which may be used with either the rearview mirror assembly of Figures 1 to 5 or 20 and 21;

Figure 43 is a top plan view of the carrier module of Figure 42;

Figure 44 is a side section of the carrier module of Figures 42 and 43;

Figure 45 is a bottom plan view of an alternative lens holder for use with the second light opening on the carrier module of Figures 42 and 44;

Figure 46 is a top plan view of the lens holder of Figure 45;

Figure 47 is a sectional side view of the lens holder of Figures 45 and 46;

Figure 48 is a sectional end view of the lens holder of Figures 45 and 46;

Figure 49 is a plan view of a lens for use with the lens holder of Figures 45 to 48;

Figure 50 is a perspective view of an alternative lens for use with the primary light opening in the carrier module of Figures 42-44;

Figure 51 is an exploded perspective view of a third embodiment of the lighted/information rearview mirror assembly of the present invention;

Figure 52 is a schematic wiring diagram for the rearview mirror assembly of Figures 1 to 5; and

Figure 53 is a schematic wiring diagram for the rearview mirror assembly of Figures 20 and 21.

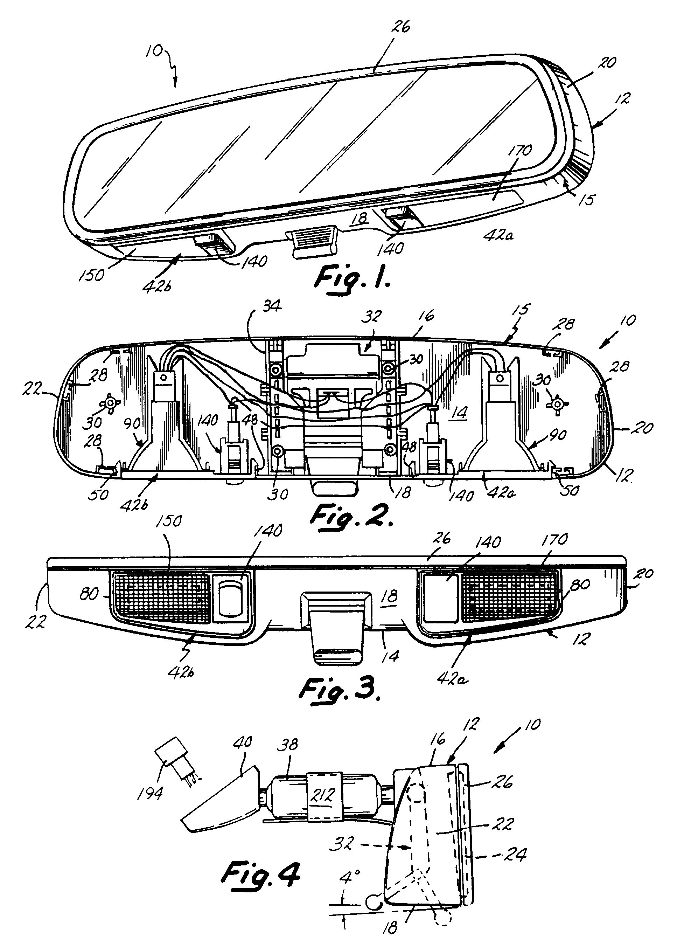

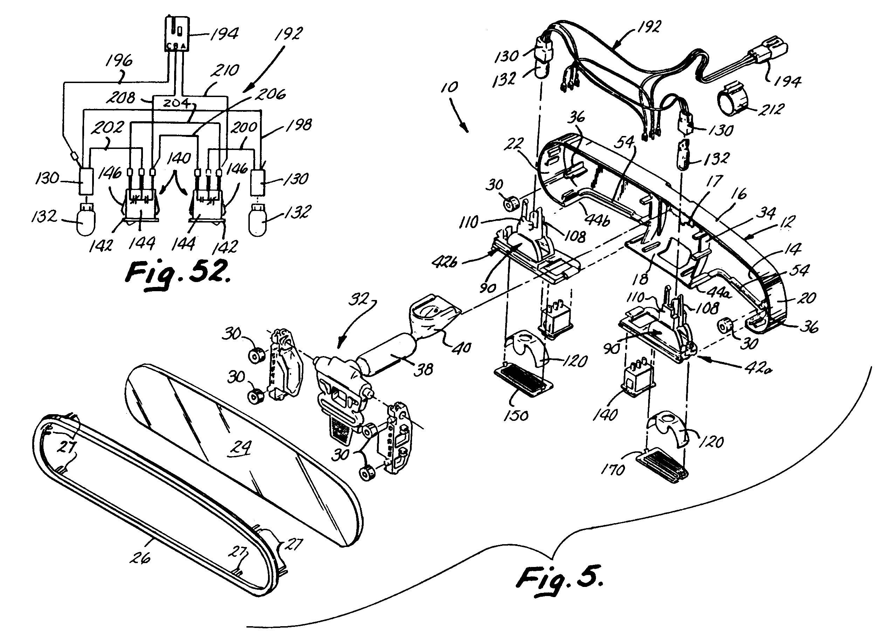

Referring now to the drawings in greater detail, Figures 1 to 5 illustrate a first embodiment 10 of the rearview mirror assembly of the present invention. The mirror assembly 10 includes a moulded thermoplastics case 12 of hollow configuration including a peripheral sidewall 15 including top wall 16, bottom wall 18 and lateral end wall portions 20, 22. The peripheral sidewall 15 spaces the mirror back 14 away from a front opening to the case adapted to receive a glass, plastics or other prismatic mirror element 24 held in place by a surrounding frame of bezel 26. The bezel 26 is secured by prongs or projections 27 (Figure 5) received in mounting brackets 28 spaced around the interior of the peripheral wall of the case. Although preferably ultrasonically welded by the prongs 27 to the brackets 28, the bezel 26 alternately may be adapted to be snap-fitted into place. The mirror element 24 is held tightly in against rubber stops or cushions 30 (Figures 2 and 5) some of which are mounted on a day/night toggle assembly 32 which is secured on mounting ribs 34 which extend transversely across the interior of the case back 14 (Figures 5 to 7). Rubber cushions 30 are also included on mounting posts 36 which extend outwardly from case back 14 as shown in Figure 5. Accordingly, the mirror element 24 is held securely in place and cushioned to avoid undue vibration from road shocks and the like when mounted with the frame bezel 26.

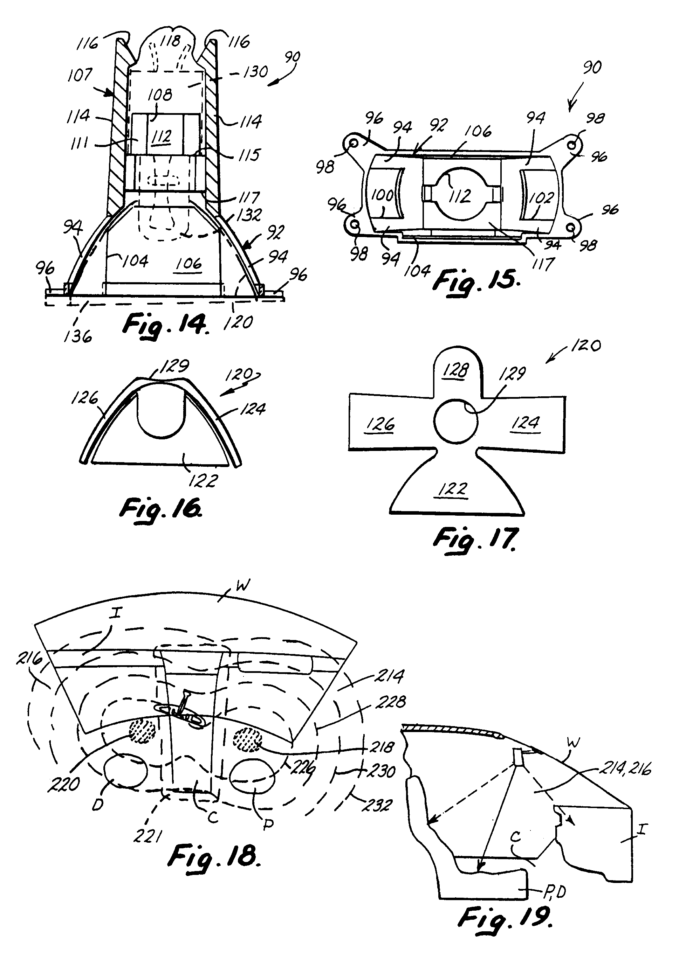

The toggle assembly 32 includes an outwardly extending ball member forming a part of adjustable double ball mounting bracket 38 including a mounting channel member 40 for attaching the toggle assembly and thus the entire mirror assembly, to a windshield mounting member on the interior surface of a windshield W over the dashboard or instrument panel areas I of a vehicle as shown in Figure 19.

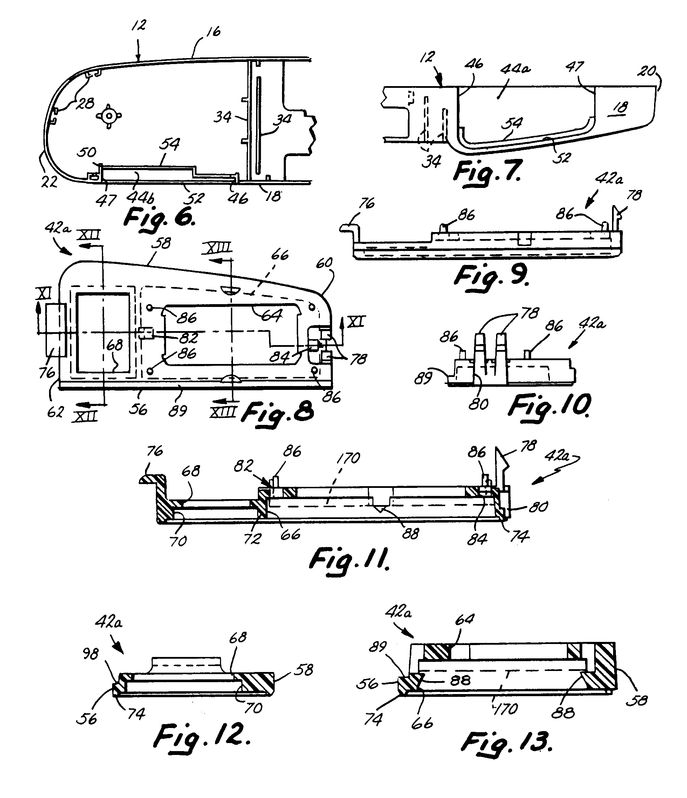

Referring now to Figures 1 to 3, 5 to 7 and 8 to 13, a pair of carrier modules 42a, 42b, which are mirror images of one another and which provide lighting assemblies for illuminating portions of the vehicle interior in which the mirror assembly 10 is mounted, are illustrated. The carrier modules 42a, 42b are received in elongated, generally trapezoidal openings 44a, 44b in the bottom wall 18 provided on the left and right hand sides of the mounting area including the ribs 34 for the day/night toggle assembly 32 in the centre of the case 12. The openings 44a, 44b are also mirror images of one another and include parallel side edges 46, 47 which include upstanding walls or ribs 48, 50 adjacent thereto (Figures 6 and 7). Spaced above the rear edge 52 of each opening 44a, 44b is a retaining flange 54 extending outwardly from the inner surface of the back wall 14 and following the contour of the outline of the opening. The flange 54 extends beyond the edge 52 of each opening such that it forms a stop or wall against which the carriers 42a, 42b are engaged to position the carrier modules flush with the exterior surface of the bottom wall 18 as shown in Figures 1-4. In addition, the retaining flange 54 is stepped to conform to the configuration of each carrier module as will be seen from Figures 9 and 11.

As shown in Figures 8 to 13, each of the carrier modules 42a, 42b, of which the module 42a is shown as an example, includes a rigid body or support having a generally trapezoidal outline conforming to the shape of the openings 44a, 44b including a rectilinear front edge 56, a curved rear edge 58 and opposing, parallel end edges 60, 62. Extending generally parallel to the front edge 56 is a rectangular light opening 64 which extends through the thickness of the carrier module body and communicates with a lens-receiving recess 66 on the exterior side of the carrier module. A second rectangular light or switch opening 68 extends generally transverse to the front wall 56 on a surface of the module body which is recessed below the surface including the opening 64. The opening 68 communicates with a lens or switch receiving recess 70 separated from the recess 66 by a divider wall 72. The entire carrier module is outlined on its exterior surface by a raised flange or rib 74.

One end of each carrier module 42a, 42b is provided with an L-shaped mounting flange 76 which fits over the top edge of the wall 48 inside the opening 44. On the opposite end 60 of the carrier module are a pair of upstanding, resilient flange projections or prongs 78 adjacent a narrow slot 80 providing an access for a screwdriver blade or other tool for removal of the carrier module when desired from the case 12. The flange projections 78 engage the case wall or rib 50 and have inclined surfaces such that, after the flange 76 is inserted over the wall 48, the opposite end 60 of the carrier module 42 may be cammed into place with the resilient flange projections 78 sliding and bending over the walls 50. When removal is desired, a screwdriver blade or other tool is inserted in the slot 60 to bend the projections 78 inwardly toward the centre of the module 42 such that the inclined undersurfaces of the flanged projections 78 may be cammed downwardly over the wall 50 to allow sliding removal of the carrier module.

A pair of lens-securing apertures 82, 84 are included adjacent either end of the opening 64 while a series of four cylindrical mounting pegs 86 are spaced adjacent each corner of the opening 64 for receiving a light socket assembly 90 as explained hereinafter. The interior sidewalls of the recess 76 include a pair of oppposed, lens-retaining projections 88 spaced below the bottom of the recess 66 by a distance slightly more than the thickness of a lens to be received in the recess 66. Further, a shoulder 89 is provided along the top of the front edge 56 for engagement by a portion of the frame bezel 26 when received in the case 12. Together with the flange 54, the shoulder 89 helps support the carrier module 42a in its flush position in the bottom wall of the case. Preferably, the carrier modules 42a, 42b are moulded from a heat resistant, thermoplastics material such as a mineral-filled nylon or other polymeric material. One suitable material is a mineral-filled nylon sold as MINLON 22C by E I Dupont de Nemours and Company of Wilmington, Delaware.

As shown in Figures 14 and 15, each carrier module 42 receives a moulded, thermoplastics light socket assembly 90 over the mounting pegs 86 such that they are aligned and in registry with the light openings 64. The light socket 90 includes a reflector-receiving basket portion 92 formed by curved, downwardly diverging legs 94 which extend into planar feet 96 each including an aperture 98 for receiving one of the mounting pegs 86. The legs 94 defined curved openings 100, 102 and 104 on three sides of the reflector basket 92 with the fourth side 106 being solid. When received in the case 12, the side 106 faces toward the mirror 24 to help block heat transfer toward the mirror from the lights in the socket 90. The interior surface of the reflector basket 92 defines the shape of a parabol and is adapted to receive a stamped, metallic, parabolic reflector 120 as described below.

Extending upwardly from the reflector basket 92 is a lamp holder 107 including spaced, upstanding walls 108, 110 (Figure 5) defining a cylindrical bulb aperture 112 extending through a base 111 and communicating with the reflector-receiving recess inside the reflector basket 92. Extending upwardly adjacent the opening between the walls 108, 110 are a pair of resilient, flanged lamp-holder retaining projections 114 each of which include inclined camming surfaces 116 for allowing the insertion of a lamp base 130 in place between the walls 108, 110 and against the top surface 115 of the base 111. Preferably, each lamp socket 90 is injection moulded from a suitable thermoplastics resinous material such as a mineral-filled nylon, one suitable type being MINLON 22C available from Dupont.

As shown in Figures 16 and 17, each of the lamp sockets 90 receives a metallic, parabolic reflector stamped from sheet metal and polished on its inner surface to preferably reflect approximately 80% of the light generated by a bulb or lamp 132 held in the lamp socket 90. The sheet metal from which the reflector is made is preferably a bright dipped, anodized aluminium alloy. As shown in figure 17, the sheet metal is stamped for forming the reflector 120 and includes a solid side 122, a pair of opposed, curved end flanges 124, 126 and a side tab 128 which partially closes the side opposite the solid side 122. A circular aperture 129 is formed at the centre and top of the converging flanges. When bent and formed, the reflector 120 has the shape of a parabola having one partially-opened side into which the tab 128 extends. The tab 128 partially shields the interior of the reflector basket solid sidewall 106 from the heat from the lamp 132 and also serves as a heat sink as does the entire reflector. The ends 24, 126 are curved to match the shape of the interior surface of the reflector basket 92 with the top of the reflector adapted to engage or fit closely adjacent the undersurface 117 of the base 11 between the reflector basket and the lampholder in the lamp socket 90. In such position, the aperture 129 is aligned and in registry with the lamp aperture 112 such that when a lamp holder 130 is mounted in the lamp socket 90 as shown in Figure 14, a lamp or bulb held in that lamp holder will project through the lamp aperture 112 and the aperture 129 in the reflector to position the filament of the bulb approxmiately at the focal point of the reflector ends 124 and 126 (Figure 14). The free ends of the side 122 and the end flanges 124, 126 are co-terminous with one another and with the legs 94 such that the reflector 120 terminates flush with the feet 96 of the light socket 90 and directs light from a lamp projecting through the aperture 129 downwardly and outwardly of the carrier module through the light opening 64.

In order to help direct light, a wedge or spacer 136, which may include an aperture for light passage, may be inserted between the lamp socket 90 and the carrier module 42 (Figure 14). The axis of the reflector 120 and the lamp 132 may thus be positioned inwardly, outwardly, forwardly or rearwardly as desired.

As shown in Figures 1, 3 and 5, each opening 68 in the carrier modules 42 of the assembly 10 is adapted to receive a rocker switch assembly 140 (Figures 5 and 53). Each rocker switch assembly includes a rectangular base 142 adapted to be received in the recess 70, an upwardly projecting switch unit 144, including a series of wire terminals, and a pair of resilient mounting flanges 146 adapted to engage the edge of the opening 68 to retain the switch in place when snapped through the opening 68.

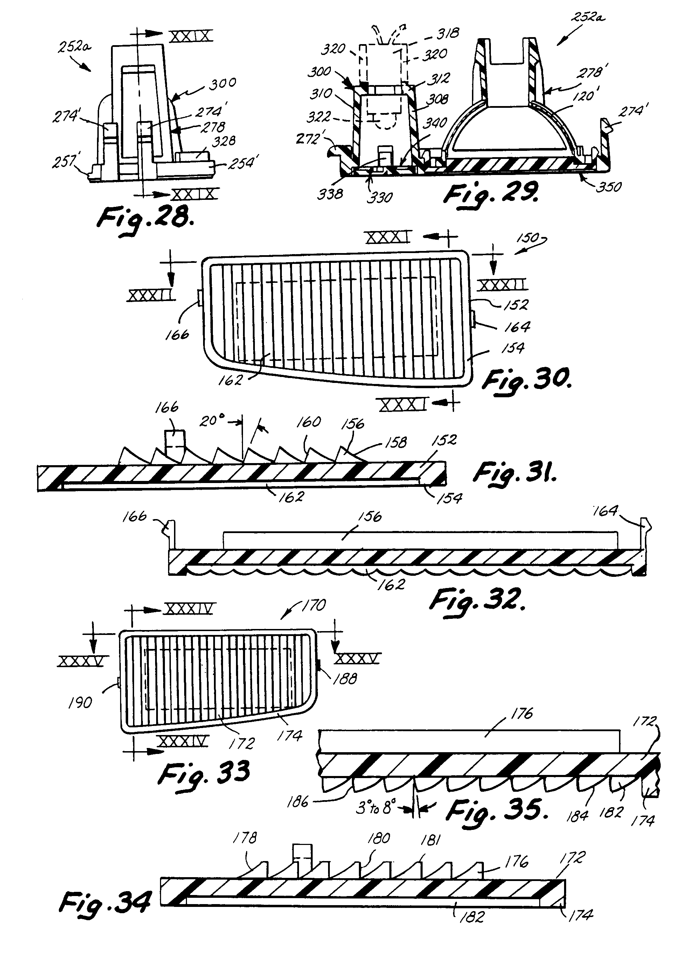

With reference to Figures 11, 13 and 30-35, each of the carrier modules 42 also receives a light directing fresnel lens in its lens receiving recess 66. The left hand carrier module 42b receives a lens 150 shown in Figures 30-32 while the right hand carrier module 42a receives a lens 170 shown in Figures 33-35. Each of the lenses 150, 170 has a configuration adapted to match the interior shape of the recess 66. The lens 150 includes a lens body 152 moulded from a clear polycarbonate material (such as that sold under the trademark LEXAN by General Electric Co. of Pittsfield, Massachusetts) and a surrounding lip 154 on its bottom surface. The top surface of the lens body 152 includes a series of lens sections or prisms 156 formed in a rectangular area (Figure 30). Each prism 156 is generally triangular in section having a preferred height of .030 inches (0.8 mm) and width of .060 inches (1.5 mm) but includes a radiused surface 158 having a preferred radius of 100 to 118 inches (2.54 to 3.00 metres) and a planar surface 160 extending at a preferred angle of 20 degress to the vertical. The undersurface of the lens 150, which faces the exterior of the carrier module, includes a series of rounded lens sections 162 extending rectilinearly in a direction transverse to the direction of the extension of rectilinear lens sections 156 on the top surface of the lens. The lens sections of 162 fill the recess defined by the lip 154 on the underside of the lens. Each of the rounded lens sections 162 has a preferred radius of .078 to .080 inches (1.98 to 2.03 mm), a preferred height of .006 inches (0.15 mm) and a width of .060 inches (1.5 mm). The lens body 162 also includes a pair of resilient mounting projections 164, 166 on either end for insertion in the mounting apertures 82, 84, respectively, of the carrier modules.

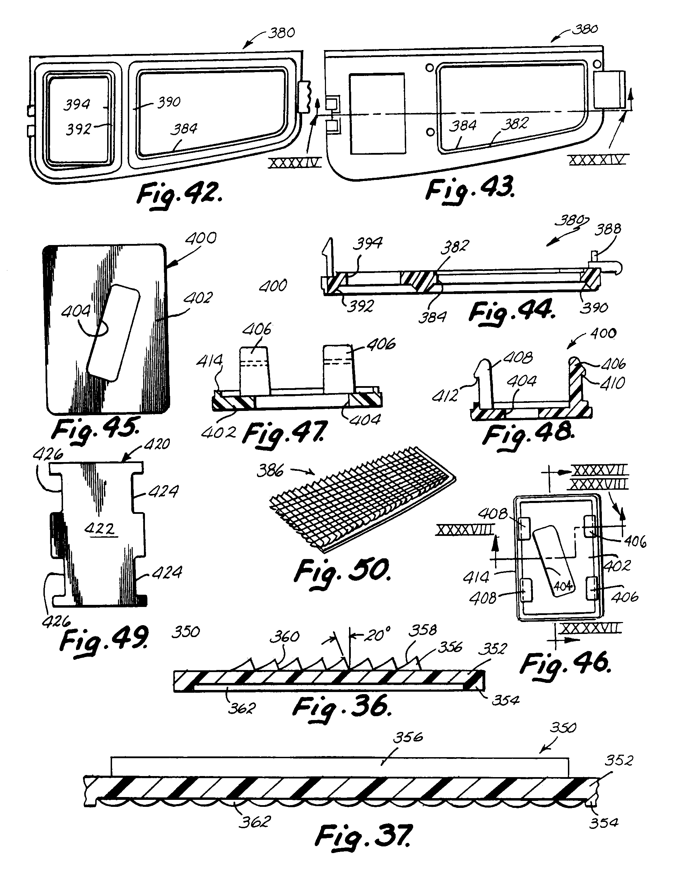

A shown in figures 33 to 35, the right hand lens 170 has a similarly configured lens body 172 including a downwardly projecting lip or flange 174, a series of rectilinear lens sections 176 on its top surface and a series of rectilinear lens sections 183 on its bottom surface inside the recess defined by the lip 174. The upwardly extending, prism-like rectilinear lens sections 176 are provided in a rectangular area shown by the dotted line in Figure 33. Each lens section 176 is a truncated prism having a radiused surface 178, a vertical surface 180 and a flat surface 181. Perferably each of the radiused surfaces 178 has a radius of 138-200 inches (3.5 to 5.1 metres) while each of the sections is .025 to .038 inches (0.64 to 0.97 mm) in height and .060 inches (1.65 mm) in width. The bottom lens sections 182 include radiused surfaces 184 and 186, the surfaces 186 extending at a preferred angle of three to eight degrees from the vertical as shown in Figure 35 and having a radius of 20 inches (51 cm). The surface 814 extends at a preferred angle of 69° 30′ from the vertical and have a preferred radius of 273 inches (6.93 metres). Like the lens 150, the lens 170 also includes mounting projections 188, 190 identical to those mounting projections 164, 166 in the lens 150 for mounting the lens in the carrier module 42.

As shown in Figures 3, 5 and 11, the lens 150 is adapted to be telescoped into the recess 66 of the left hand carier module 42b such that the mounting projections 164, 166 engage the apertures 82, 84. The lens 170 is telescoped into the similar recess 66 in the right hand carrier module 42a such that the projections 188, 190 engage the apertures 82, 84. When so mounted, the retaining projections 88 engage the undersurface of the flange or lip 154 or 174 to securely retain the lens against the bottom surface of the recess. In such a position, each lens is aligned with the bulb and parabolic reflector and directs and focuses the light downwardly and outwardly of the ends of the lighted rearview mirror in the pattern shown in figures 18 and 19.

Electrical connections within the rearview mirror assembly 10 are made via a wire harness 192 (Figure 5) which includes the lamp holder 130 receiving the lamps 132, as mentioned above, and a three-wire connector 194 for connection of the harness to an external power source from the vehicle in which the mirror assembly is mounted. As shown in the schematic wiring diagram of Figure 52, one side of a twelve volt direct current power source is connected through a line 196 of one of the lamp bases 130 which in turn is connected by a line 198 to the other lamp base 130. The lamp bases 130 are likewise connected to each of the switch units 140 by links 200, 202 with the switch units 140 being interconnected by further lines 204 and 206. Additional lines 208 and 210 lead back to the three wire connectors from the respective switch units. Accordingly, the wiring harness 192 allows power to be switched to each of the lamp bases 130 independently of one another such that the driver or passenger of the vehicle can independently actuate his or her light assembly without requiring the activation of the other light assembly in the mirror assembly 10. The three-wire harness 192 extends through an opening 17 (Figure 5) in the rear of the case 12, while the wires are held to the mounting bracket 38 by a resilient moulded clip 212 (Figures 4 and 5).

Accordingly, as shown in Figures 18 and 19, when both lamps 132 in the assembly 10 are switched on with the switches 140, light is directed to areas 214 and 216 downwardly and outwardly of either end of the mirror assembly which is shown in typical angled position for viewing by the vehicle driver when mounted on the windshield of a vehicle. Within each of the areas 214, 216, the lenses 150, 170 focus and direct light to smaller, targeted areas 218, 220 which generally are positioned in the lap areas of the driver D and passenger P when seated in the left and right hand front seats of the vehicle. Intermediate the targeted ares 218, 220, the lighted areas 214, 216 overlap to provide a greater light intensity in the console area between the two seats over a console C. Likewise, as shown in Figure 19, the lighted areas 214, 216 extend downwardly and rearwardly from the mirror through an angle of approximately 60 degrees to cover the lap area and seat area of the front seat of the vehicle but to generally avoid lighting the dashboard or instrument panel.

Preferably, with the lamps 132 being wedge-base lamps No. 168 available from General Electric Co. (r-3-1/4 bulb, 13/32 diameter) and the lenses 150, 170 inserted in carriers 42a, 42b, the target areas 218, 220 have a peak intensity of 70 lux. Lighted areas have a graduated, decreasing intensity as the distance from the lamp and lenses increases. Thus, the "iso-bar" 226 in Figure 18 represents 60 lux, the "iso-bar" 228 represents 50 lux, the "iso-bar" 230 represents 40 lux and the "iso-bar" 232 represents 30 lux.

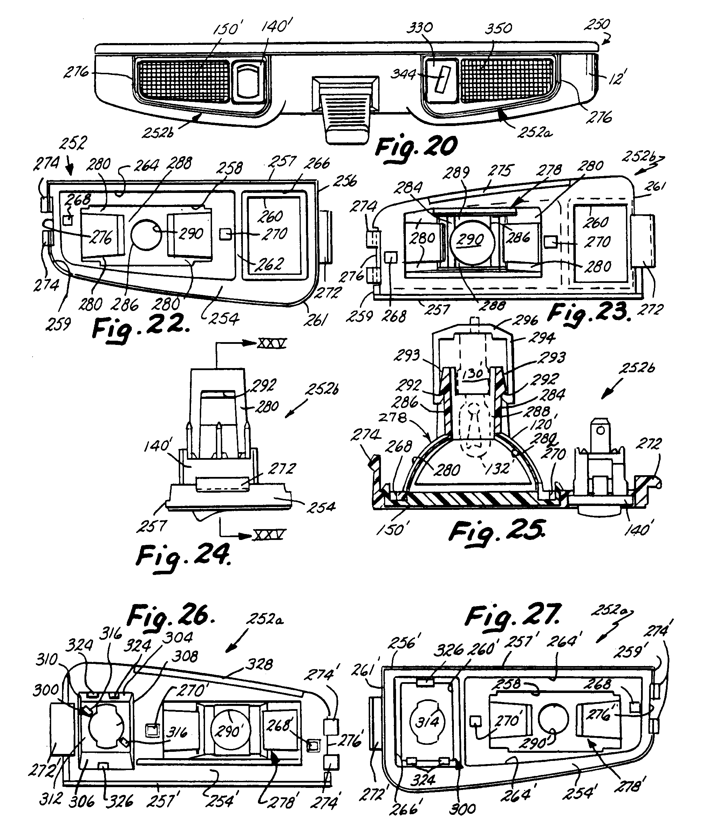

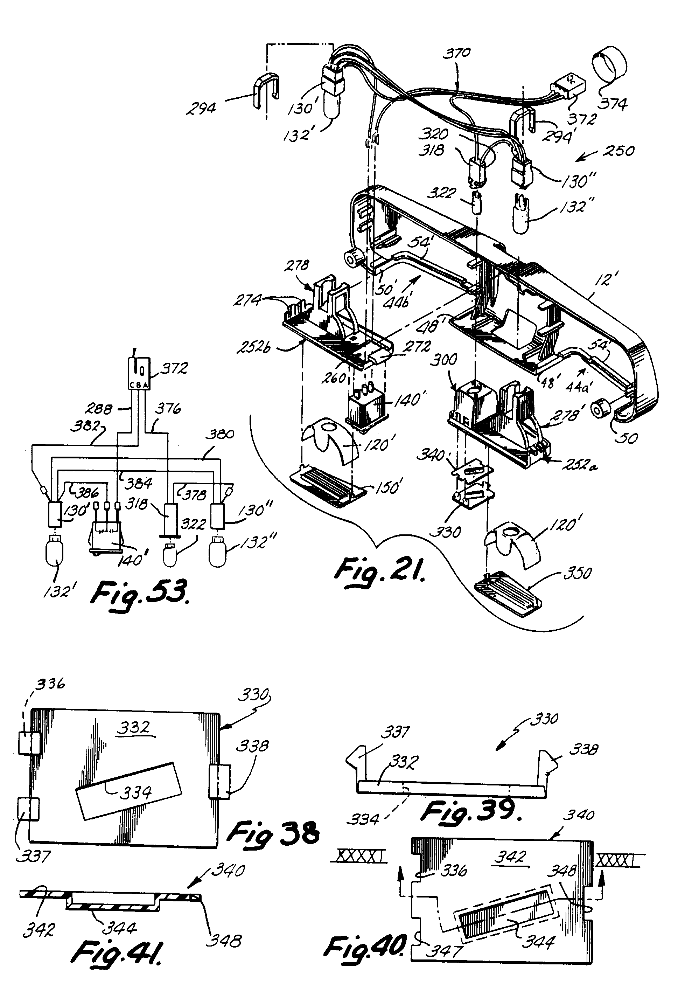

Referring now to Figures 20 and 21, a second embodiment 250 of the lighted rearview mirror assembly incorporating the present invention is illustrated. In the embodiment 250, like parts to those in embodiment 10 are referred to by the same numberals with the addition of a prime.

The assembly 250 includes the moulded thermoplastic mirror case 12′ substantially identical to the mirror case 12 expect that its shape is generally rectangular instead of trapezoidal when viewed from the front. The case 12′ includes similar elements for mounting a toggle assembly 32 and similar walls and flanges for mounting carrier modules therewithin as in the case 12. The primary differences between the embodiment 250 and the assembly 10 are the provision of differing carrier modules 252a and 252b which are mounted flush with the bottom of the case 12′ and are described in detail below.

Referring now to Figures 22-25, the left hand carrier module 252b having a shape similar to the carrier modules 42 and adapted to be inserted in the opening 44b′ (Figure 21) of the case 12′ includes a moulded, thermoplastics, rigid body portion 254 having a projecting lip or flange 256 on its exterior surface and a pair of rectangular openings 258, 260 spaced from one another by a dividing wall 262. The apertures 258, 260 are oriented similarly to those in the carrier modules 42, with the aperture 258 being generally parallel to a front edge 257 while the longer dimension of the aperture 260 is generally parallel to end edges 259, 261 of module 252b. Like the carrier module 42, the exterior surface of the module 252b includes lens recesses 264, 266 surrounding the apertures 258, 260 respectively. Lens mounting apertures 268, 270 extend through the bottom of the recess 264 adjacent the ends of the aperture 258 for receiving the mounting projections from a lens as in the carrier modules 42. Similarly, a rigid, L-shaped mounting flange 272 and resilient flanged mounting projections 274 on opposite ends 262, 259 are included as in the carrier modules 42 to allow mounting of the carrier module 252b within an opening 44b' of on the case ribs 48', 50'. A rib 275 along the rear edge of the module 252b engages against the flange 54'. A slot 276 is provided adjacent the projections 274 for receiving a tool to bend them back to allow removal of the carrier module from the opening 44b'. Like the modules 42, the aperture 260 is adapted to receive a switch unit 140' within the recess 266 from the exterior side of the carrier module, while the recess 264 receives a transparent lens 150' having mounting projections inserted through the apertures 268, 270 as shown in Figure 25.

A primary difference between the carrier modules 42 and 252b is the inclusion of an integral lamp socket 278 moulded in one piece with the body of the carrier 252b such that it extends above the aperture 258. The lamp socket 278 includes curved support legs 280 defining a reflector recess 282 in the shape of a parabola for receiving a stamped, parabolic reflector of the type shown in phantom in Figure 25 at 120'. The lamp socket defined opening on three sides of the reflector recess 282 as in the lamp socket 90 and includes a series of upstanding walls 284, 286, 288 and 289 defining a cylindrical bulb aperture 290 extending generally perpendicular to the plane of the aperture 258. The upstanding walls 284, 286, 288 and 289 defining a cylindrical bulb aperture 290 extending generally perpendicular to the panel of the aperture 258. The upstanding walls 284, 286 include recessed areas defining inclined shoulder 292 on opposite sides of the lamp socket over which is secured a resilient-shaped retainer clip 294 also moulded from a resilient thermoplastics material such as MINLON 22c. The surfaces 293 leading to the shoulder 292 are inclined for the top to allow ease of insertion and spreading of the legs of the clip 294. The clip 294 includes projections which engage under the inclined shoulder 292 when in place as shown in Figure 25. The map socket 278 is adapted to receive a lamp base 130' against the top surfaces of the walls 288, 289 (Figure 25) over which is placed the U-shaped clip 94 with its base 296 engaging the top of the lamp base to hold it in position. The bulb 132' projects downwardly through the opening 290 with its filament positioned aproximatly at the focal point of the parabolic reflector 120' when received in the reflector recess 282 with the lens 150' secured in place and holding the reflector 120' in that postion.

Referring now to Figures 26 to 29, the right hand carrier module 252a of the mirror assembly 250 is illustrated wherein like numerals with the addition of a prime indicate like parts to those in the carrier 252b. The primary difference between the carrier modules 252a and 252b is the inclusion of a second light socket or housing 300 which is moulded in one piece with the carrier body 254' and extends over the rectangular opening 260' and projects inwardly into the space behind the mirror element in the assembly 250 when the carrier module 252 is mounted within the opening 44a'. The housing 300 is generally rectangular and includes upstanding side and end walls 304, 306 and 308, 310, respectively, as well as a top wall 312 having a configured aperture 314 and a pair of opposed stops 316. The aperture 314 receives a bayonet-type lamp base 318 which includes projecting side flange 320 which engages the stops 316 when the lamp base is rotated after insertion through the aperture 314. The lamp base 318 holds a lamp 322, which is smaller and produces less light than the lamps or bulbs 132, 132' in the lamp sockets 90, 278 and 278'. The housing 300 also includes a pair of mounting apertures 324 at the base of the wall 304 and a single mounting aperture 326 at the base of the wall 306 for receiving mounting projections from a lens assembly inserted from the exterior of the carrier module 252a as described below. In addition to the housing 300, the carrier module 250a also includes a rear wall 328 which extends along the curved rear edge of the carrier module for engagement with the underside of the retaining flange 54' in the case 12' when the carrier module is inserted in the opening 44a' as shown in Figure 21.

As shown in Figures 21, 29 and 38-40, the recess 266' surrounding the aperture 260' beneath the housing 300 receives a rectangular lens holder 330 holding a lens 340 generally parallel to the opening 260' and beneath the bulb in the housing 300. The lens holder 300 is preferably moulded from a thermoplastics resinous material such as MINLON 22C and includes a generally planar base 332 having an angled rectangular aperture 334 extending therethrough for receiving a portion of the lens 340, as well as flanged mounting projections 336, 337 and 338 on opposite end of the holder. The mounting projections 336, 337 and 338 correspond in position to the apertures 324, 326 respectively in the housing 300 and are sufficiently resilient and include arcuate acute angled surfaces to allow pressing of the lens holder into place with the projections 336, 337 and 338 cammed into position in those housing apertures. For removal, those same projections may be bent backwardly be pressing the flanges thereof into the apertures and pulling the end housing out of the recess 266'.

The lens 340 rests atop the inner surface of the lens holder 330 and is preferably formed from a clear polycarbonate such as LEXAN. The lens 340 includes a generally planar base 342 and a moulded rectangular recess areas 344 adapted to be received within the angled rectangular aperture 334 of the holder 330. Similarly, the lens 340 includes recesses 346, 347 receiving the sides of the mounting projections 336, 337 of the holder 330 and a recess 348 receiving the sides of the mounting projection 338. As shown in Figure 29, the lens 340 is placed atop the holder 330 with the recessed portion 344 received in the aperture 334 and the combination is then pressed in place into the recess 266' with the mounting projections 336, 337 and 338 holding the combined holder and lens in place and flush with the bottom surface of the carrier 252a below the bulb 322 in the housing 300.

As shown in Figures 21, 37 and 38, a light-directing lens 350, which is substantially a mirror image of the lens 150, is adapted to be inserted in the carrier module 252a from its exterior, bottom side and is also preferably formed or moulded from a clear polycarbonate such as LEXAN. The lens 350 includes a body 352, a downwardly projecting lip 254, a series of rectilinear lens sections 356 each having a radiused lens surface 358 and a rectilinear inclined surface 360. The inclined surface is preferably at 20 degrees to the vertical while the surfaces 358 each have a preferred radius of 100 to 118 inches (2.54 to 3.00 metres) as in the lens 150. The lens sections 356 define an overall rectangular shape adapted to be received in the aperture 258' of the carrier module 252a when the lens 350 is inserted in the recess 264'.

On the bottom side of the lens 350 are a series of rounded lens sections 362 each of which has a preferred radius of .078 to .080 inches (1.98 to 2.03 mm), a width of .060 inches (1.5 mm) and a height of .006 inches (0.15 mm). The lens sections 362 extend rectilinearly in a direction transverse to the direction of extension of the lens sections 356 just as in the lens 150. When the lens 350 is mounted in the right hand carrier module 252a, the combined lens sections 356, 362 bend light from the bulb 132'' (Figure 21) downwardly and outwardly of the right hand end of the mirror assembly to form a generally lighted area similar in shape to the area 214 in figure 18. Similarly, the lens 150' received in the carrier module 252b, forms a light pattern similar to the area 216 in Figure 18.

As shown in Figure 21, electrical energy is supplied to lamp sockets 278, 278' and the lamp housing 300 by a wiring harness 370 which includes the lamp bases 130' and 130'', receiving the lamps 132' and 132'', respectively, as well as the lamp base 318 receiving the smaller lamp 322 for the housing 300. A three-wire connector 372 provides a connection to the vehicle electrical system external of the mirror assembly 250, while a clip or wire retainer 374 holds the wires which extend out of the mirror assembly against the mirror adjustment bracket 38 (Figure 4).

The preferred wiring arrangement for the mirror assembly 250 is shown in figure 53 including a wire 376 connected to one side of a twelve volt direct current power source through the connector 372 and leading to the lamp base 318. The circuit is completed through the lamp base 318 by wire connectors 378 and 380 which lead to the lamp bases 130'' and 130'; and ultimately back to the wire connector 372 through the wire 382. Thus, the lamp 322 is connected to an external circuit and/or switch in the vehicle but is unswitched within the wire harness 370. A typical arrangement is to connect the wires 376 and 382 through the connector 372 to the headlight circuit of a vehicle such that when the headlights or parking lamps are turned on in the vehicle the lamp 322 will be turned on to provide light at all times when the vehicle lights are on. Since the aperture 334 and the lens portion 344 are angled to correspond to the normal mirror viewing angle when postioned by the driver of a vehicle, they will direct light from the bulb 322 on the console area such as that shown at 221 in Figure 18 when the vehicle headlights are on. The lamp bases 130' and 130'' are connected through a single switch unit 140' with wires 384, 386 and 388 leading to the connector 372 to complete the circuit such that they are controlled by the switch 140' independently of the vehicle headlight circuit which controls the clamp 322.

Referring to Figures 42-44, a third alternative carrier module 380 similar to the carrier modules 42 is illustrated. The carrier module 380 includes a rigid body, mounting flanges and resilient mounting projections, light and switch unit receiving apertures, mounting pegs and an access slot for bending the mounting flanges to remove the carrier from the case all as in the carrier modules 42. The primary difference between the carrier modules 342 and 380 is the provision of a lens recess 382 on the interior surface of the carrier module as shown in Figures 43 and 44. The recess 382 outlines the periphery of the light opening 384 and is adapted to receive a lens 386 (Figure 50). The lens 386 is similar to the lens 150 except that the border area around the rectangular portion defined by lens segments 156 is eliminated. The lens 386 is adapted to be received in the recess 382 prior to the mounting of lamp socket 90 over the mounting pegs 388. A further difference in the carrier module 380 from the carrier modules 42 is the provision of inclined recess walls 390, 392 on the exterior, bottom surface of the carrier module which provides a better feel and appearance for the module when the carrier module is touched for use of the switch unit adapted to be received in the aperture 394.

Alternatively, the carrier module 380 may receive a lens holder and lens (as shown in Figures 45-49) in the aperture 394 instead of a switch unit. In this form, the carrier module 380 would be used with an assembly such as the rearview mirror 250 in Figure 20 and 21. An alternative lens holder 440 is also moulded from a resinous plastic material such as MINLON 22C and includes a rectangular base 402, an angled light directing aperture 404 as in the lens holder 330 and two pairs of spaced resilient mounting projections 406, 408 projecting upwardly from the inside surface of the lens holder. The mounting projections 406, 408 include shoulders 410, 412 respectively and inclined surfaces allowing them to be cammed over the inside edges of the aperture 394 in carrier 380. The shoulders 410, 412 hold the lens holder 400 in place with the flange 414 engaging the inside surface of the recess around the aperture 394 adjacent the inclined walls 392.

Fitted within a wall 414 in the lens holder 400 is a clear acrylic generally planar lens 420 shown in Figure 49. The lens 420 includes a planar body 422 and two opposing pairs of recesses 424, 426 adapted to receive the sides of mounting projections 406, 408 in the lens holder 400 when received within the lens recess defined by the wall 414 on the inner surfce of the lens holder 400. Accordingly, when the lens 420 is inserted in the lens holder 400, the combination may be inserted in the aperture 394 of the carrier 380 in place of a switch unit to provide a carrier module similar to carrier module 252a in rearview mirror assembly 250.

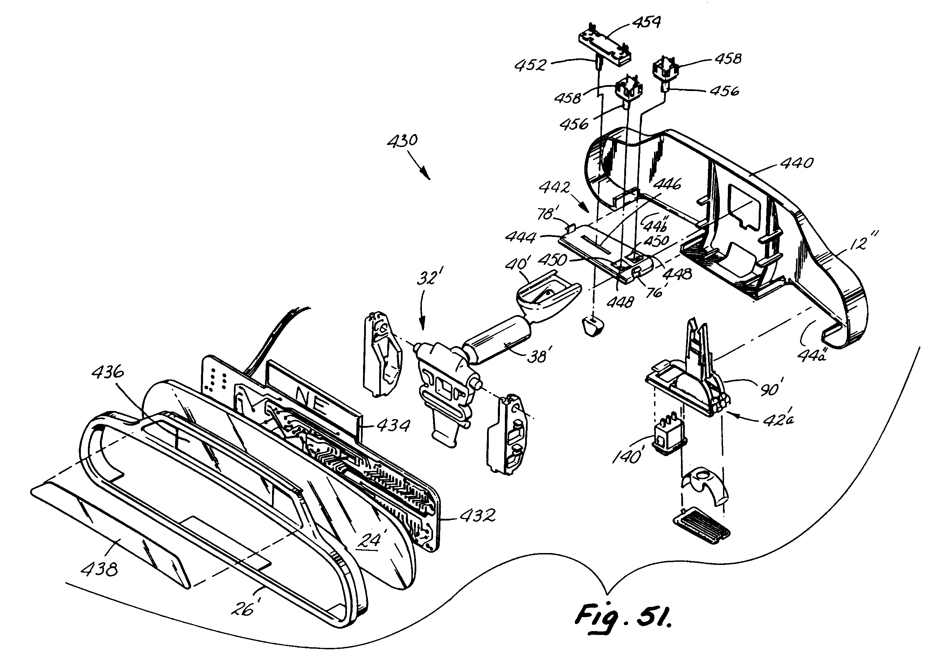

A third embodiment 430 of the rearview mirror assembly incorporating the present invention is shown in Figure 51 where like parts bear like numerals to those referred to above in other assembly embodiments with the addition of a prime. The embodiment 430 incorporates an electronic directional compass including an electronic printed circuit board 432 with an upstanding display readout 434 adapted to be read through an upwardly projecting information display area 436 on the top of the frame bezel 26′. The display area 436 is covered with a planar lens 438. Sandwiched between the frame bezel and the printed circuit 432 is a prismatic mirror element 24′. The combination of the frame bezel 26, the mirror element 24′ and the printed circuit 432 is inserted into the front opening of a moulded thermoplastics mirror case 12″ including a contoured area 440 closing the back of the display area 436 at the top of the mirror assembly. The remainder of the moulded thermoplastics case 12″ is substantially similar to cases 12 and 12′ as is the day/night toggle actuator 32′, the adjustable mounting bracket 38′ and the mounting channel 40′.

Instead of the pair of carrier modules on which are mounted light assemblies, the right hand carrier module 42a′ is the same as the carrier module 42a in the assembly 10. It includes a lamp socket assembly 90 mounted over a light opening in the carrier module and receives a parabolic reflector 120′ and a lens 170′ or another lens as described herein depending on the area desired to be lighted. In addition, a switch unit 140′ is inserted in a second aperture in the module 42a′ just as in the module 42a. When inserted in the opening 44a″, the mirror assembly can provide light directed downwardly and outwardly of the assembly from the light socket assembly 90′ as controlled by the switch unit 140′ through appropriate wiring (not shown) leading out the back of the mirror case in the same manner as described in the other assemblies above.

On the left hand side of the case assembly 430, is a modified carrier module 442 adapted to fit in the bottom opening 44b″ of the case 12″. The carrier module 442 includes a generally planar rigid body formed from moulded thermoplastics material such as MINLON 22C and includes an L-shaped flange 76′ and at least one resilient mounting projection 78′ and a removal slot 76′ on opposite ends of the rigid body 444. Instead of including light openings, however, the carrier module 442 includes a slot 446 extending generally parallel to the front edge of the module and a pair of circular apertures 448 formed in recesses 450. The slot 446 receives a sliding control element 452 from a rheostat unit 454 adapted to be mounted on the inside surface of the carrier module 442 to control the light intensity of the display area 434 from the electronic compass circuit 432. Also, the apertures 448 are adapted to receive cylindrical, rotatable control elements 456 from potentiometer units 458 mounted in the recesses 450 to control, adjust and compensate the operation of the compass circuit 432. Accordingly, when the rheostat 454 and the potentiometers 458 are mounted on the interior surface of the carrier module 442, the control elements 452, 456 project downwardly from the exterior bottom surface of the carrier module and are accessible from the bottom of the mirror assembly for control purposes.

As will now be understood, the carrier modules 42, 252, 380 and 442 may be interchanged as desired to provide varying combinations of lights, switch units, instrument controls and the like in each mirror assembly. Single lights may be used with control elements as in the assembly 430. Double or triple lights can be included with various switches or other controls as desired. It is also possible to mount instruments themselves on the carrier modules to provide sensing circuitry for various environmental conditions, clocks, or timers, engine parameters or the like all of which may be read on display panels or other readout units mounted somewhere on the case assembly. It will also be understood that the upward slant of the bottom surface of the case assemblies as shown in figure 4 at a preferred angle of four degrees prevents any glare or point surfaces of light from being visible to the driver's eyes thereby increasing safety and preventing vision impairment for the driver when the assembly includes lighting as described above. It is also apparent the various types of moulded thermoplastics or other cases can be substituted for the case 12, 12′ and 12″ and that the size, shape spacing the positioning of the openings for the carrier modules in the case can be varied as desired. In addition, it is possible to use the various carrier modules in mirror cases not including day/night toggle assemblies but rather standard mounting assemblies in which planar instead of prismatic mirror elements are included in the assembly. In addition, it is possible to eliminate all lights from the assembly and use carrier modules mounting only instrument or instrument controls if desired.

**Claims**

1.  A case assembly (10,250,430) for a vehicular rearview mirror comprising a mirror case (12,12',12") having a back and a peripheral sidewall defining a front opening adapted to receive a mirror element, the peripheral sidewall including top, bottom and end wall portions, the back being spaced from the front opening to define an interior space within the case and means (32,32') for mounting the case to a support characterised in that the case assembly has an opening (44) in the bottom wall portion; carrier means (42,252,380,442) for supporting a light, a control or an instrument within the interior space, the carrier means including a rigid support within the opening such that the support is generally flush with the exterior of the bottom wall portion, and removal means (78,80) accessible from the bottom of the case assembly for allowing removal of the carrier means from the bottom wall opening.

2.  A case assembly as claimed in claim 1 in which the carrier means includes a light assembly (90,278) on the inside surface of the rigid support, the light assembly projecting into space and including a lamp socket (92,282) a reflector (120,120') in the lamp socket for directing light downwardly, an electric lamp (132,132') in the lamp socket projecting into the interior of the reflector, and a lens (150,170,350,386) mounted below the lamp socket, reflector and lamp.

3.  A case assembly as claimed in claim 2 in which the support further includes an electrical switch (140,140'), and wiring means (192,370) at least partially in the space connecting the switch between the lamp and an electrical source.

4.  A case assembly as claimed in claim 2 or claim 3 in which the support further includes a second lamp socket (300) adjacent the first said lamp socket, the second lamp socket including an electric lamp (322) and a second lens (340) for directing light from the second lamp downwardly and outwardly of the assembly.

5.  A case assembly as claimed in claim 4 including wiring means (192,370) at least partially in the space connecting the first lamp to the said switch on the assembly and the second lamp to a further switch external of the assembly.

6.  A case assembly as claimed in any of the preceding claims in which the support includes a control unit (454,458) having a control element (452,456) extending from the support for access from the bottom of the case assembly.

7.  A case assembly as claimed in claim 6 including a directional compass means (432) for sensing the directional heading position of the case assembly and display means (434) for displaying the directional heading sensed by the compass means; and the control unit (458) including compensating controls (456) for adjusting the compass means.

8.  A case assembly as claimed in claim 1 in which the carrier means is one of a number of interchangeable modules configured to the contour of the opening and comprising a selected one of the following:

(a) a light assembly (90,278) having a lamp (132,132'), a lamp holder (107,294), a reflector (120,120') and a lens (150,170,350,386) for directing light from the lamp outwardly of the case assembly;

(b) a pair of light assemblies (90,278,300) mounted adjacent one another on the module, each light assembly having a lamp (132,132',322), a lamp holder (107,294,318) and a lens (150,170,350,386,340) for separately directing light from each respective lamp outwardly of the case assembly;

(c) a light assembly (90,278) having a lamp (132,132'), a lamp holder (107,294), a reflector (120,120') and a lens (150,170,350,386) for directing light from the lamp outwardly of the case assembly, and an electrical switch (140,140') for controlling the operation of the lamp;

(d) a control unit (454,458) for controlling the operation of an instrument, the control unit including a control element (452,456) extending from the module below the case assembly for access from the bottom of the assembly; and

(e) an electrical switch (140,140').

9. A case assembly as claimed in any of the preceding claims when dependent upon claim 2 in which the support includes a light opening (64,258) therethrough; the lamp socket including a hollow framework (92,282) extending upwardly from the support and aligned over the light opening, the framework having curved, downwardly diverging sides (94,280) defining a reflector recess; the reflector (120,120') mounted within the reflector recess; and lamp holder means (70,294) for supporting the lamp above the reflector recess, the lamp holder means including a lamp aperture (112,290) opening into the reflector recess.

10. A case assembly as claimed in claim 9 including resilient retaining means (107) for releasably holding the lamp and a lamp base on the lamp holder means.

11. A case assembly as claimed in claim 9 or claim 10 in which the support includes a plurality of upstanding mounting pegs (86) adjacent the light opening; the hollow framework including a base (96) having mounting apertures (98) receiving the mounting pegs for securing the framework over the light opening.

12. A case assembly as claimed in any of claims 9 to 11 including a lens recess (68,264) surrounding the light opening on the exterior side of the rigid support and a lens mounting aperture (82,84,268,270) adjacent the light opening on the lens recess.

13. A case assembly as claimed in claim 12 including at least one lens support projection (88) on the wall of the recess and spaced from the bottom of the recess.

14. A case assembly as claimed in claim 9 in which the rigid support further includes a second opening (68) therethrough and adjacent the light opening.

15. A case assembly as claimed in claim 14 in which the second opening includes an electrical switch (140,140') mounted therein for operating the lamp.

16. A case assembly as claimed in claim 14 including a light housing (300) aligned with the second opening on the inner surface of the rigid support, the light housing including means (314) for receiving a lamp base thereon; a second lens recess (70) surrounding the second opening on the exterior side of the rigid support; and light directing lens (330,340) means in the second recess for directing light outwardly of the case assembly.

17. A case assembly as claimed in claim 14 in which each of the light opening and second opening are recessed with respect to the exterior of the support which is flush with the bottom wall portion.

18. A case assembly as claimed in claim 9 including a lens recess (382) on the inside surface of the support and outlining the light opening.

19. A case assembly as claimed in any of the preceding claims when dependent upon claim 2 including spacing means (36) between the light assembly and rigid support for positioning the lamp socket, reflector and lamp with respect to the support such that the light may be selectively angled.

20. A case assembly as claimed in claim 1 in which the case includes a pair of upstanding ribs (48,50) on the inner surface of the bottom wall portion adjacent opposing sides of the opening; the mounting means including a support flange (76) projecting outwardly from one end of the rigid support and engaging one of the ribs, and at least one resilient flanged projection (78) extending from the other end of the rigid support and engaging the other of the ribs; the removal means comprising slot means adjacent the resilient projection for inserting a tool (80) to bend the projection to remove the support from the case.

21. A case assembly as claimed in claim 20 including a retaining flange (54) on the inner surface of the case back, the retaining flange spaced above the opening and extending over the opening; the rigid support engaging the retaining flange to retain the support flush with the bottom wall portions; the case including a bezel (26) for holding a mirror element over the front opening of the case; and the support also including a flange (89) engaging a portion of the bezel to help retain the support flush with the bottom wall portions.

22. A case assembly as claimed in any of the preceding claims in which the bottom wall portion (18) is inclined upwardly and away from the bottom opening such that the carrier means is not visible when the case assembly is viewed from the direction of the front opening.

23. A case assembly as claimed in claim 1 having a second opening (44) in the bottom wall portion, a carrier module (42,252,380,442) received in each of the openings, each carrier module configured to the shape of the opening such that it generally fills the opening in which it is received and including a body, mounting means for mounting the body within the respective opening, support means for supporting a light, a control or an instrument on the body and projecting into the interior space, the removal means allowing removal of each carrier module from the respective opening and the bottom wall portion for access to the light, control or instrument when that module is removed.

24. A case assembly as claimed in claim 23 in which the body further includes an electrical switch (140,140') and wiring means (192,370) at least partially in the space connecting the switch between the lamp and an electrical source.

25. A case assembly as claimed in claim 23 in which the body includes a recess (68,264) for receiving the lens, the recess surrounding the light opening.

26. A case assembly as claimed in claim 25 in which the light opening (64,258) is recessed with respect to the exterior surface of the body.

27. A case assembly as claimed in claim 23 having lamp holder means which includes a pair of spaced, resilient retaining numbers (114) for releasably holding the lamp and a lamp base on the lamp holder means.

28. A case assembly as claimed in any of claims 23 to 27 in which the body includes a control unit (454,458) mounted on the support means for controlling the operation of an instrument mounted within the case, the control unit including a control element (452,456) extending from the body for access from the bottom of the case assembly.

29. A case assembly as claimed in claim 28 including a directional compass means (432) for sensing the directional heading position of the case assembly and display means (434) for displaying the directional heading sensed by the compass means; the control unit (458) including compensating controls (456) for adjusting the compass means.

30. A case assembly as claimed in any of claims 23 to 29 in which the case includes a pair of upstanding ribs (48,50) on the inner surface of the bottom wall portion adjacent opposing sides of each of the openings; the mounting means including a support flange (76) projecting outwardly from one end of the body and engaging one of the ribs, and at least one resilient flanged projection (78) extending from the other end of the body and engaging the other of the ribs; and the removal means including slot means (80) adjacent the resilient projection projection for inserting a tool to bend the projection to remove the support from the case.

31. A case assembly as claimed in claim 30 including a pair of retaining flanges (54) on the inner surface of the case back, each of the retaining flanges spaced above one of the openings and extending over the said one opening; the body engaging the retaining flange to retain the support flush with the bottom wall portions; the case including a bezel (26) for holding a mirror element over the front opening of the case; and the body also including a flange (89) engaging a portion of the bezel to help retain the body flush with the bottom wall portions.

32. A case assembly as claimed in any of claims 23 to 28 in which one of the carrier modules includes an opening (64,258) therethrough and a light assembly (92,282) supported thereon for directing light through the opening and outwardly of the case.

33. A case assembly as claimed in claim 32 in which the other of the carrier modules also includes an opening (64,258) and a light assembly (92,282) supported thereon for directing light through the opening and outwardly of the case; and at least one of the carrier modules also including an electrical switch (140,140') connected to at least one of the light assemblies and supported for access from the exterior of the one carrier module.

34. A case assembly as claimed in claim 32 in which the other of the carrier modules includes a control unit (454,458) for controlling the operation of an instrument mounted within the case, the control unit including a control element (452,456) extending from the module for access from the bottom of the case assembly.

35. A case assembly as claimed in claim 1 wherein the peripheral sidewall includes lateral ends; the carrier means including lighting means (90,278) for illuminating areas adjacent the assembly; and light-directing means for directing light from the lighting means to illuminate an area below and outwardly of one lateral end of the case with a predetermined amount of light, the area including a smaller, targeted area being directed and positioned generally to illuminate the lap area of the person seated in a front seat of a vehicle with the case assembly mounted in normal driver viewing position generally above the instrument panel of the vehicle.

36. A case assembly as claimed in claim 35 in which the light-directing means include means for directing light from the lighting means to illuminate a second area below and outwardly of the other lateral end of the case with a predetermined amount of light, the second area including a second smaller targeted area of brighter, more intense light therewithin, the second targeted area being directed and positioned to generally illuminate the lap area of a second person seated in a front seat of the vehicle.

37. A case assembly as claimed in claim 36 in which the lighting means includes a light assembly (90,278) mounted in the bottom of the mirror case; and the lighting directing means including a reflector (120,120') and a lens (150,170,250,386) mounted on the light assembly and beneath a light source (132,132') in the assembly.

38. A case assembly as claimed in claim 37 in which the lighting means includes a second light assembly (90,278) spaced from the first light assembly mounted in the bottom of the mirror case; and the light directing means including a second reflector (120,120') and a second lens (150,170,350,386) mounted on the second light assembly and beneath a second light source (132,132') in the assembly.

39. A case assembly as claimed in claim 38 in which the lighting means include a third light assembly (300) mounted in the bottom of the mirror case, the third light assembly including a separate light-directing means (330,340) for directing light toward an area between the targeted areas.

40. A case assembly as claimed in claim 39 in which the light-directing means direct light such that the first and second areas overlap one another in an area between the targeted areas.

**Revendications**

1. Un ensemble de boîtier (10, 250, 430) pour un rétroviseur de véhicule, comprenant un réceptacle de miroir (12, 12', 12") pourvu d'une paroi arrière et d'une paroi latérale périphérique définissant une ouverture frontale adaptée pour recevoir un élément formant miroir, la paroi latérale périphérique comprenant des parties de paroi supérieure, inférieure et extrême, la paroi arrière étant espacée de l'ouverture frontale de façon à définir un espace intérieur dans le boîtier et des moyens (32, 32') pour le montage du boîtier sur un support, caractérisé en ce que l'ensemble de boîtier comporte une ouverture (44) dans la partie de paroi inférieure ; un moyen de support (42, 252, 380, 442) servant à supporter une lampe, une commande ou un instrument dans l'espace intérieur, le moyen de support comprenant un support rigide situé à l'intérieur de l'ouverture de telle sorte que le support soit dans l'ensemble en affleurement avec l'extérieur de la partie de paroi inférieure, et des moyens d'enlèvement (78, 80) accessibles à partir de la base de l'ensemble de boîtier pour permettre d'enlever le moyen de support de l'ouverture de paroi inférieure.

**2.** Un ensemble de boîtier tel que revendiqué dans la revendication 1, dans lequel le moyen de support comporte un ensemble d'éclairage (90, 278) sur la surface intérieure du support rigide, l'ensemble d'éclairage faisant saillie dans l'espace et comportant une douille de lampe (92, 282), un réflecteur (120, 120') situé dans la douille de lampe pour diriger la lumière vers le bas, une lampe électrique (132, 132') située dans la douille et faisant saillie dans l'intérieur du réflecteur, et une lentille (150, 170, 350, 386) montée en dessous de la douille de lampe, du réflecteur et de la lampe.

**3.** Un ensemble de boîtier tel que revendiqué dans la revendication 2, dans lequel le support comprend en outre un interrupteur électrique (140, 140') et des moyens de câblage (192, 370) situés au moins en partie dans l'espace et reliant l'interrupteur entre la lampe et une source électrique.

**4.** Un ensemble de boîtier tel que revendiqué dans la revendication 2 ou la revendication 3, dans lequel le support comprend en outre une seconde douille de lampe (300) adjacente à la première douille de lampe, la seconde douille de lampe comportant une lampe électrique (322) et une seconde lentille (340) pour diriger de la lumière provenant de la seconde lampe vers le bas et vers l'extérieur de l'ensemble.

**5.** Un ensemble de boîtier tel que revendiqué dans la revendication 4, comprenant des moyens de câblage (192, 370) situés au moins partiellement dans l'espace et reliant la première lampe audit interrupteur de l'ensemble ainsi que la seconde lampe avec un autre interrupteur extérieur à l'ensemble.

**6.** Un ensemble de boîtier tel que revendiqué dans une quelconque des revendications précédentes, dans lequel le support comprend une unité de commande (454, 458) comportant un élément de commande (452, 456) s'étendant à partir du support pour un accès par la base de l'ensemble de boîtier.

**7.** Un ensemble de boîtier tel que revendiqué dans la revendication 6, comprenant un moyen formant compas directionnel (432) pour détecter la position d'orientation de l'ensemble de boîtier ainsi qu'un moyen d'affichage (434) pour afficher l'orientation détectée par le moyen formant compas ; et l'unité de commande (458) comprend des commandes de compensation (456) pour ajuster le moyen formant compas.

**8.** Un ensemble de boîtier tel que revendiqué dans la revendication 1, dans lequel le moyen de support est l'un d'un certain nombre de modules interchangeables ayant une configuration adaptée au contour de l'ouverture et comprenant un ensemble sélectionné parmi les ensembles suivants :

(a) un ensemble d'éclairage (90, 278) comportant une lampe (132, 132'), un support de lampe (107, 294), un réflecteur (120, 120') et une lentille (150, 170, 350, 386) pour diriger de la lumière provenant de la lampe vers l'extérieur de l'ensemble de boîtier;

(b) une paire d'ensembles d'éclairage (90, 278, 300) montés dans des positions mutuellement adjacentes sur le module, chaque ensemble d'éclairage comportant une lampe (132, 132', 322), un support de lampe (107, 294, 318) et une lentille (150, 170, 350, 386, 340) pour diriger séparément de la lumière provenant de chaque lampe respective vers l'extérieur de l'ensemble de boîtier ;

(c) un ensemble d'éclairage (90, 278) comportant une lampe (132, 132'), un support de lampe (107, 294), un réflecteur (120? 120') et une lentille (150, 170, 350, 386) pour diriger de la lumière provenant de la lampe vers l'extérieur de l'ensemble de boîtier, et un interrupteur électrique (140, 140') pour commander le fonctionnement de la lampe :

(d) une unité de commande (454, 458) pour commander le fonctionnement d'un instrument, l'unité de commande comportant un élément de commande (452, 456) s'étendant à partir du module en dessous de l'ensemble de boîtier pour un accès à partir de la base de l'ensemble ; et

(e) un interrupteur électrique (140, 140').

**9.** Un ensemble de boîtier tel que revendiqué dans une quelconque des revendications précédentes lorsqu'elles sont dépendantes de la revendication 2, dans lequel le support comprend une ouverture de passage de lumière (64, 258) : la douille de lampe comportant un châssis creux (92, 282) s'étendant vers le haut à partir du support et aligné avec l'ouverture de passage de lumière, le châssis comportant des côtés incurvés et divergeant vers le bas (94, 280) en définissant un évidement pour réflecteur : le réflecteur (120, 120') monté à l'intérieur de l'évidement correspondant et un support de lampe (70, 294) pour supporter la lampe au-dessus de l'évidement pour réflecteur, le support de lampe comportant une ouverture pour lampe (112, 290) débouchant dans l'évidement pour réflecteur.

10. Un ensemble de boîtier tel que revendiqué dans la revendication 9, comprenant des moyens élastiques de retenue (107) pour maintenir de façon séparable la lampe et une base de lampe sur le support de lampe.

11. Un ensemble de boîtier tel que revendiqué dans la revendication 9 ou la revendication 10, dans lequel le support comprend plusieurs broches de montage (86) dirigées vers le haut et adjacentes à l'ouverture de passage de lumière : le châssis creux comprenant une base (96) pourvue d'ouvertures de montage (98) recevant les broches de montage pour la fixation du châssis sur l'ouverture de passage de lumière.

12. Un ensemble de boîtier tel que revendiqué dans une quelconque des revendications 9 à 11, comprenant un évidement récepteur de lentille (68, 264) qui entoure l'ouverture de passage de lumière sur le côté extérieur du support rigide et une ouverture de montage de lentille (82, 84, 268, 270) adjacente à l'ouverture de passage de lumière prévue dans l'évidement pour lentille.

13. Un ensemble de boîtier tel que revendiqué dans la revendication 12, comprenant au moins une protubérance de support de lentille (88) prévue sur la paroi de l'évidement et espacée du fond de l'évidement.

14. Un ensemble de boîtier tel que revendiqué dans la revendication 9, dans lequel le support rigide comprend en outre une seconde ouverture (68) le traversant et adjacente à l'ouverture de passage de lumière.

15. Un ensemble de boîtier tel que revendiqué dans la revendication 14, dans lequel la seconde ouverture comporte un interrupteur électrique (140, 140') monté intérieurement pour actionner la lampe.

16. Un ensemble de boîtier tel que revendiqué dans la revendication 14, comprenant un carter d'éclairage (300) aligné avec la seconde ouverture prévue dans la surface intérieure du support rigide, le carter d'éclairage comportant un moyen (314) pour recevoir une base de lampe : un second évidement pour lentille (70) entourant la seconde ouverture sur le côté extérieur du support rigide : et une lentille directrice de lumière (330, 340) qui est située dans le second évidement pour diriger de la lumière vers l'extérieur de l'ensemble de boîtier.

17. Un ensemble de boîtier tel que revendiqué dans la revendication 14, dans lequel chacune des ouvertures constituées par l'ouverture de passage de lumière et la seconde ouverture sont situées en retrait par rapport à l'extérieur du support qui est en affleurement avec la partie de paroi inférieure.

18. Un ensemble de boîtier tel que revendiqué dans la revendication 9, comprenant un évidement pour lentille (382) qui est formé dans la surface intérieure du support et qui met en évidence l'ouverture de passage de lumière.

19. Un ensemble de boîtier tel que revendiqué dans une quelconque des revendications précédentes, lorsqu'elles sont dépendantes de la revendication 2, comprenant un moyen d'espacement (36) situé entre l'ensemble d'éclairage et le support rigide pour le positionnement de la douille de lampe, du réflecteur et de la lampe par rapport au support de telle sorte que la lumière puisse être sélectivement inclinée.

20. Un ensemble de boîtier tel que revendiqué dans la revendication 1, dans lequel le boîtier comprend deux nervures en saillie (48, 50) sur la surface intérieure de la partie de paroi inférieure adjacente à des côtés opposés de l'ouverture : les moyens de montage comprenant un rebord de support (76) faisant saillie extérieurement d'une extrémité du support rigide et s'appliquant contre une des nervures, et au moins une saillie à rebord élastique ( 78) s'étendant à partir de l'autre extrémité du support rigide et s'appliquant contre l'autre nervure ; le moyen d'enlèvement comprenant une fente adjacente à la protubérance élastique pour l'introduction d'un outil (80) en vue de produire une flexion de la saillie pour enlever le support hors du boîtier.

21. Un ensemble de boîtier tel que revendiqué dans la revendication 20, comprenant un rebord de retenue (54) prévu sur la surface intérieure de la paroi arrière du boîtier, le rebord de retenue étant espacé supérieurement de l'ouverture et s'étendant au-dessus de celle-ci : le support rigide s'appliquant contre le rebord de retenue pour maintenir le support en affleurement avec la partie de paroi inférieure ; le boîtier comprenant un biseau (26) pour maintenir un élément formant miroir sur l'ouverture frontale du boîtier : et le support comportant également un rebord (89) s'appliquant contre une partie du biseau pour contribuer au maintien du support en affleurement avec la partie de paroi inférieure.

22. Un ensemble de boîtier tel que revendiqué dans une quelconque des revendications précédentes, dans lequel la partie de paroi inférieure (18) est inclinée vers le haut et en éloignement de l'ouverture inférieure de telle sorte que le moyen de suport ne soit pas visible lorsque l'ensemble formant boîtier est observé dans la direction de l'ouverture frontale.

23. Un ensemble de boîtier tel que revendiqué dans la revendication 1, comportant une seconde ouverture (44) dans la partie de paroi inférieure, un module de support (42, 252, 380, 442) reçu dans chacune des ouvertures, chaque module de support ayant une configuration adaptée à la forme de l'ouverture de telle sorte qu'il remplisse généralement l'ouverture dans laquelle il est reçu, ledit module comprenant un corps, des moyens pour monter le corps dans l'ouverture respective, des moyens pour supporter une lampe, une commande ou un instrument sur le corps et faisant saillie dans l'espace intérieur, le moyen d'enlèvement permettant d'enlever chaque module de support de l'ouverture respective et de la partie de paroi inférieure en vue d'accéder à la lampe, à la commande ou à l'instrument quand ce module est enlevé.

24. Un ensemble de boîtier tel que revendiqué dans la revendication 23, dans lequel le corps comprend en outre un interrupteur électrique (140, 140') et des moyens de câblage (192, 370) situés au moins partiellement dans l'espace et reliant l'interrupteur entre la lampe et la source électrique.

25. Un ensemble de boîtier tel que revendiqué dans la revendication 23, dans lequel le corps comprend un évidement (68, 264) pour recevoir la lentille, l'évidement entourant l'ouverture de passage de lumière.

26. Un ensemble de boîtier tel que revendiqué dans la revendication 25, dans lequel l'ouverture de passage de lumière (64, 258) est situé en retrait par rapport à la surface extérieure du corps.

27. Un ensemble de boîtier tel que revendiqué dans la revendication 23, comportant un moyen de support de lampe qui comporte une paire d'éléments de retenue élastiques et espacés (114) pour maintenir de façon séparable la lampe et une base de lampe sur le moyen de support de lampe.

28. Un ensemble de boîtier tel que revendiqué dans une quelconque des revendications 23 à 27, dans lequel le corps comprend une unité de commande (454, 458) montée sur le moyen de support pour commander le fonctionnement d'un instrument installé à l'intérieur du boîtier, l'unité de commande comprenant un élément de commande (452, 456) s'étendant à partir du corps pour un accès à partir de la base de l'ensemble de boîtier.

29. Un ensemble de boîtier tel que revendiqué dans la revendication 28, comprenant un moyen formant compas directionnel (432) pour détecter la position d'orientation de l'ensemble de boîtier et un moyen d'affichage (434) pour afficher l'orientation détectée par le moyen formant compas : l'unité de commande (458) comprenant des commandes de compensation (456) pour ajuster le moyen formant compas.

30. Un ensemble de boîtier tel que revendiqué dans une quelconque des revendications 23 à 29, dans lequel le boîtier comprend deux nervures (48, 50) dirigées vers le haut sur la surface intérieure de la partie de paroi inférieure dans des positions adjacentes à des côtés opposés de chacune des ouvertures; les moyens de montage comprenant un rebord porteur (76) faisant saillie vers l'extérieur à partir d'une extrémité du corps et s'appliquant contre une des nervures, et au moins une protubérance à collerette élastique (78) s'étendant à partir de l'autre extrémité du corps et s'appliquant contre l'autre nervure:
et les moyens d'enlèvement comprenant une fente (80) adjacente à la protubérance élastique de façon à permettre l'introduction d'un outil pour infléchir la protubérance afin d'enlever le support du boîtier.

31. Un ensemble de boîtier tel que revendiqué dans la revendication 30, comprenant deux rebords de retenue (54) situés sur la surface intérieure de la paroi arrière du boîtier, chacun des rebords de retenue étant espacé supérieurement d'une des ouvertures et s'étendant au-dessus de l'ouverture précitée: le corps s'appliquant contre le rebord de retenue afin de maintenir le support en affleurement avec la partie de paroi inférieure : le boîtier comportant un biseau (26) pour maintenir un élément formant miroir sur l'ouverture frontale du boîtier : et le corps comportant également un rebord (89) s'appliquant contre une partie du biseau pour contribuer à retenir le corps en affleurement avec la partie de paroi inférieure.

32. Un ensemble de boîtier tel que revendiqué dans une quelconque des revendications 23 à 28, dans lequel un des modules porteurs comprend une ouverture (64, 258) le traversant et un ensemble d'éclairage (92, 282) supporté de façon à diriger de la lumière à travers l'ouverture et vers l'extérieur du boîtier.

33. Un ensemble de boîtier tel que revendiqué dans la revendication 32, dans lequel l'autre des modules porteurs précités comporte également une ouverture (64, 258) et un ensemble d'éclairage (92, 282) supporté de façon à diriger de la lumière à travers l'ouverture et vers l'extérieur du boîtier, et au moins un des modules porteurs comporte également un interrupteur électrique (140, 140') relié à au moins un des ensembles d'éclairage et supporté pour un accès à partir de l'extérieur du module porteur cité en premier.

34. Un ensemble de boîtier tel que revendiqué dans la revendication 32, dans lequel l'autre des modules porteurs précités comprend une unité de commande (454, 458) pour commander le fonctionnement d'un instrument monté à l'intérieur du boîtier, l'unité de commande comportant un élément de commande (452, 456) s'étendant à partir du module pour un accès à partir de la base de l'ensemble de boîtier.

35. Un ensemble de boîtier tel que revendiqué dans la revendication 1, dans lequel la paroi latérale périphérique comporte des extrémités latérales ; les moyens de support comprenant un moyen d'éclairage (90, 278) pour éclairer des zones adjacentes à l'ensemble ; et un moyen directeur de lumière pour diriger de la lumière à partir du moyen d'éclairage afin d'éclairer une zone située en dessous et vers l'extérieur d'une extrémité latérale du boîtier avec une quantité prédéterminée de lumière, cette zone comprenant une zone ciblée plus petite qui est dirigée et positionnée généralement de façon à éclairer la zone entourant la personne assise sur un siège avant d'un véhicule, l'ensemble de boîtier étant monté dans une position de vision normale du conducteur généralement au-dessus du tableau de bord du véhicule.

36. Un ensemble de boîtier tel que revendiqué dans la revendication 35 dans lequel le moyen directeur de lumière comprend un moyen pour diriger de la lumière à partir du moyen d'éclairage afin d'éclairer une seconde zone située en dessous et vers l'extérieur de l'autre extrémité latérale du boîtier avec une quantité prédéterminée de lumière, la seconde zone comprenant une seconde zone ciblée plus petite recevant une lumière plus intense et plus brillante, la seconde zone ciblée étant dirigée et positionnée de façon à éclairer généralement la zone entourant une seconde personne assise sur un siège avant du véhicule.

37. Un ensemble de boîtier tel que revendiqué dans la revendication 36, dans lequel le moyen d'éclairage comprend un ensemble d'éclairage (90, 278) monté dans le fond du réceptacle de miroir ; et le moyen directeur de lumière comprend un réflecteur (120, 120') et une lentille (150, 170, 250, 386) montée sur l'ensemble d'éclairage et en dessous d'une source de lumière (132, 132') dans l'ensemble.

38. Un ensemble de boîtier tel que revendiqué dans la revendication 37, dans lequel le moyen d'éclairage comprend un second ensemble d'éclairage (90, 278) espacé du premier ensemble d'éclairage monté dans le fond du réceptacle de miroir : et le moyen directeur de lumière comprend un second réflecteur (120, 120') et une seconde lentille (150, 170, 350, 386) montée sur le second ensemble d'éclairage et en dessous d'une seconde source de lumière (132, 132') dans l'ensemble.

39. Un ensemble de boîtier tel que revendiqué dans la revendication 38, dans lequel le moyen d'éclairage comprend un troisième ensemble d'éclairage (300) monté dans le fond du réceptacle de miroir, le troisième ensemble d'éclairage comprenant un moyen directeur de lumière séparé (330, 340) pour diriger de la lumière vers une zone située entre les zones ciblées.

40. Un ensemble de boîtier tel que revendiqué dans la revendication 39, dans lequel le moyen directeur de lumière dirige de la lumière de telle sorte que les première et seconde zones se chevauchent mutuellement dans une zone située entre les zones ciblées.

**Patentansprüche**

1. Gehäusekonstruktion (10, 250, 430) für einen Fahrzeugrückspiegel, umfassend ein Spiegelgehäuse (12, 12', 12'') mit einer Rückwand und einer umlaufenden Seitenwand, die eine stirnseitige Öffnung zur Aufnahme eines Spiegelements bildet, wobei die umlaufende Seitenwand obere, untere und stirnseitige Wandabschnitte aufweist und die Rückwand mit Abstand zu der stirnseitigen Öffnung angeordnet ist, um einen Innenraum in dem Gehäuse zu bilden, sowie Einrichtungen (32, 32') zur Befestigung des Gehäuses an einer Haltevorrichtung,
**dadurch gekennzeichnet, daß**
die Gehäusekonstruktion umfaßt eine Öffnung (44) in dem unteren Wandabschnitt, eine Trägereinrichtung (42, 252, 380, 442) zur Lagerung einer Leuchte, einer Steuerung oder eines Instruments in dem Innenraum, wobei die Trägereinrichtung eine feste Haltevorrichtung in der Öffnung aufweist, welche i.w. bündig mit der Außenseite des unteren Wandabschnittes ist, sowie eine herausnehmbare Einrichtung (78, 80), die von der Unterseite der Gehäusekonstruktion her zugänglich ist, um den Ausbau der Trägereinrichtung aus der unteren Wandöffnung zu ermöglichen.

2. Gehäusekonstruktion nach Anspruch 1,
**dadurch gekennzeichnet, daß**
die Trägereinrichtung eine Leuchtvorrichtung (90, 278) auf der Innenfläche der festen Haltevorrichtung aufweist, wobei die Leuchtvorrichtung sich in den Raum erstreckt und eine Lampenfassung (92, 282), einen Reflektor (120, 120') in der Lampenfassung, um das Licht nach unten zu richten, eine elektrische Lampe (132, 132') in der Lampenfassung, die sich in das Innere des Reflektors erstreckt, und eine Linse (150, 170, 350, 386) aufweist, die unterhalb der Lampenfassung, des Reflektors und der Lampe angeordnet ist.

3. Gehäusekonstruktion nach Anspruch 2,
**dadurch gekennzeichnet, daß**
die Haltevorrichtung einen elektrischen Schalter (140, 140') und eine Verdrahtungsvorrichtung (192, 370) aufweist, die sich zumindest teilweise in den Raum erstreckt und den Schalter zwischen der Lampe und einer Stromquelle anschließt.

4. Gehäusekonstruktion nach Anspruch 2 oder 3,
**dadurch gekennzeichnet, daß**
die Haltevorrichtung ferner eine zweite Lampenfassung (300) aufweist, die neben der ersten Lampenfassung angeordnet ist, wobei die zweite Lampenfassung eine elektrische Lampe (322) und eine zweite Linse (340) aufweist, um das Licht von der zweiten Lampe nach unten und aus der Konstruktion heraus zu richten.

5. Gehäusekonstruktion nach Anspruch 4,
**dadurch gekennzeichnet, daß**
sie eine Verdrahtungsvorrichtung (192, 370) aufweist, die sich zumindest teilweise in den Raum erstreckt und die erste Lampe mit dem Schalter an der Konstruktion und die zweite Lampe mit einem weiteren Schalter außerhalb der Konstruktion verbindet.

6. Gehäusekonstruktion nach einem der vorhergehenden Ansprüche,
**dadurch gekennzeichnet, daß**
die Haltevorrichtung eine Steuereinheit (454, 458) mit einem Steuerelement (452, 456) aufweist, das sich von der Haltevorrichtung erstreckt, damit es von der Unterseite der Gehäusekonstruktion her zugänglich ist.

7. Gehäusekonstruktion nach Anspruch 6,
**dadurch gekennzeichnet, daß**
sie eine Richtungskompaßvorrichtung (432) umfaßt, um die Kursrichtung der Gehäusekonstruktion zu bestimmen, und eine Anzeigevorrichtung (434), um die von der Kompaßvorrichtung ermittelte Kursrichtung anzuzeigen, und die Steuereinheit (458) Ausgleichssteuereinrichtungen (456) zur Einstellung der Kompaßvorrichtung aufweist.

8. Gehäusekonstruktion nach Anspruch 1,
**dadurch gekennzeichnet, daß**
die Trägereinrichtung eine Einheit aus einer Anzahl austauschbarer Einheiten ist, die entsprechend den Umrissen der Öffnung geformt sind und aus einer der folgenden bestehen:
    (a) eine Leuchtvorrichtung (90, 278) mit einer Lampe (132, 132'), einer Lampenfassung (107, 294), einem Reflektor (120, 120') und einer Linse (150, 170, 350, 386), um das Licht von der Lampe aus der Gehäusekonstruktion heraus zu richten;
    (b) ein Paar Leuchtvorrichtungen (90, 278, 300), die nebeneinander auf der Einheit befestigt sind, wobei die Leuchtvorrichtungen jeweils eine Lampe (132, 132', 322), eine Lampenfassung (107, 294, 318) und eine Linse (150, 170, 350, 386, 340) aufweist, um jeweils das Licht von der jeweiligen Lampe aus der Gehäusekonstruktion heraus zu richten;

(c) eine Leuchtvorrichtung (90, 278) mit einer Lampe (132, 132'), einer Lampenfassung (107, 294), einem Reflektor (120, 120') und einer Linse (150, 170, 350, 386), um das Licht von der Lampe aus der Gehäusekonstruktion heraus zu richten, und einem elektrischen Schalter (140, 140'), um den Betrieb der Lampe zu steuern;

(d) eine Steuereinheit (454, 458) zur Steuerung des Betriebs eines Instruments, wobei die Steuereinheit ein Steuerelement (452, 456) umfaßt, das sich von der Einheit unterhalb der Gehäusekonstruktion erstreckt, damit es von der Unterseite der Konstruktion her zugänglich ist;

(e) ein elektrischer Schalter (140, 140').

9. Gehäusekonstruktion nach einem der vorhergehenden Ansprüche in Abhängigkeit von Anspruch 2,
**dadurch gekennzeichnet, daß**
die Haltevorrichtung eine sich durch sie erstreckende Lichtöffnung (64, 258) aufweist, die Lampenfassung eine Hohlrahmenkonstruktion (92, 282) umfaßt, die sich von der Haltevorrichtung nach oben erstreckt und über der Lichtöffnung ausgerichtet ist, wobei die Rahmenkonstruktion gebogenene, nach unten auseinandergehende Seiten (94, 280) aufweist, die eine Reflektoraussparung bilden, der Reflektor (120, 120') in der Reflektoraussparung befestigt ist und eine Lampenfassungseinrichtung (70, 294) vorgesehen ist, um die Lampe oberhalb der Reflektoraussparung zu lagern, wobei die Lampenfassung eine Lampenöffnung (112, 290) aufweist, die sich in die Reflektoraussparung hinein öffnet.

10. Gehäusekonstruktion nach Anspruch 9,
**dadurch gekennzeichnet, daß**
sie eine elastische Halteeinrichtung (107) zum lösbaren Halten der Lampe und eines Lampensockels auf der Lampenfassungsvorrichtung aufweist.

11. Gehäusekonstruktion nach Anspruch 9 oder 10,
**dadurch gekennzeichnet, daß**
die Haltevorrichtung eine Vielzahl aufrechtstehender Stifte (86) neben der Lichtöffnung aufweist, die Hohlrahmenkonstruktion eine Grundfläche (96) mit Befestigungsöffnungen (98) aufweist, welche die Befestigungsstifte zur Befestigung der Rahmenkonstruktion über der Lichtöffnung aufnehmen.

12. Gehäusekonstruktion nach einem der Ansprüche 9 bis 11,
**dadurch gekennzeichnet, daß**
sie eine Linsenaussparung (68, 264) umfaßt, welche die Lichtöffnung an der Außenseite der festen Haltevorrichtung umgibt, und eine Linsenbefestigungsöffnung (82, 84, 268, 270), die neben der Lichtöffnung auf der Linsenaussparung vorgesehen ist.

13. Gehäusekonstruktion nach Anspruch 12,
**dadurch gekennzeichnet, daß**
sie zumindest einen Linsenhaltevorsprung (88) aufweist, der an der Wand der Ausparung und mit Abstand zu der Unterseite der Aussparung angeordnet ist.

14. Gehäusekonstruktion nach Anspruch 9,
**dadurch gekennzeichnet, daß**
die feste Haltevorrichtung ferner eine zweite durch sie verlaufende Öffnung (68) aufweist, die neben der Lichtöffnung angeordnet ist.

15. Gehäusekonstruktion nach Anspruch 14,
**dadurch gekennzeichnet, daß**
die zweite Öffnung einen elektrischen Schalter (140, 140') aufnimmt, der darin zur Bedienung der Lampe angebracht ist.

16. Gehäusekonstruktion nach Anspruch 14,
**dadurch gekennzeichnet, daß**
sie ein Lampengehäuse (300) umfaßt, das nach der zweiten Öffnung auf der Innenseite der festen Haltevorrichtung ausgerichtet ist, wobei das Lampengehäuse eine Einrichtung (314) aufweist, auf welcher der Lampensockel aufgenommen wird, daß eine zweite Linsenaussparung (70) vorgesehen ist, welche die zweite Öffnung an der Außenseite der festen Haltevorrichtung umgibt, sowie Lichtrichtungslinsenvorrichtungen (330, 340) in der zweiten Aussparung, um das Licht aus der Gehäusekonstruktion heraus zu richten.

17. Gehäusekonstruktion nach Anspruch 14,
**dadurch gekennzeichnet, daß**
die Lichtöffnung und die zweite Lichtöffnung jeweils bezüglich der Außenseite der Haltevorrichtung, die bündig mit dem unteren Wandabschnitt ist, ausgespart sind.

18. Gehäusekonstruktion nach Anspruch 9,
**dadurch gekennzeichnet, daß**
sie eine Linsenaussparung (382) aufweist, die auf der Innenfläche der Haltevorrichtung angebracht ist und um die Lichtöffnung herum verläuft.

19. Gehäusekonstruktion nach einem der vorhergehenden Ansprüche in Abhängkeit von Anspruch 2,
**dadurch gekennzeichnet, daß**
sie Abstandseinrichtungen (36) zwischen der Leuchtvorrichtung und der festen Haltevorrichtung aufweist, um die Lampenfassung, den Reflektor und die Lampe bezüglich der Haltevorrichtung so zu positionieren, daß das Licht in einem gewünschten Winkel gerichtet wird.

20. Gehäusekonstruktion nach Anspruch 1,
**dadurch gekennzeichnet, daß**
das Gehäuse ein Paar aufrechtstehender Rippen (48, 50) auf der Innenfläche des unteren Wandabschnitts aufweist, die an gegenüberliegende Seiten der Öffnung angrenzen, daß die Befestigungseinrichtung einen Stützflansch (76) aufweist, der sich von einem Ende der festen Haltevorrichtung nach außen erstreckt und mit einer der Rippen in Eingriff ist, und zumindest einen elastischen Flanschvorsprung (78), der sich von dem anderen Ende der festen Haltevorrichtung erstreckt und mit der anderen Rippe in Eingriff ist, und daß die herausnehmbare Einrichtung Schlitzeinrichtungen aufweist, die an den elastischen Vorsprung angrenzen, um ein Werkzeug (80) zum Umbiegen des Vorsprungs für den Ausbau der Haltevorrichtung aus dem Gehäuse einzuführen.

21. Gehäusekonstruktion nach Anspruch 20,
**dadurch gekennzeichnet, daß**
sie einen Halteflansch (54) auf der Innenseite der Gehäuserückwand aufweist, wobei der Halteflansch mit Abstand über der Öffnung angeordnet ist und über der Öffnung verläuft, daß die feste Haltevorrichtung mit dem Halteflansch in Eingriff ist, damit die Haltevorrichtung bündig mit den unteren Wandabschnitten gehalten wird, daß das Gehäuse eine Einfassung (26) aufweist, um ein Spiegelelement über der Öffnung des Gehäuses zu halten, und daß die Haltevorrichtung ferner einen Flansch (89) aufweist, der mit einem Teil der Einfassung in Eingriff ist, um die Haltevorrichtung bündig mit dem unteren Wandabschnitt zu halten.

22. Gehäusekonstruktion nach einem der vorhergehenden Ansprüche,
**dadurch gekennzeichnet, daß**
der untere Wandabschnitt (18) so nach oben und entgegengesetzt zu der unteren Öffnung geneigt ist, daß die Trägereinrichtung nicht sichtbar ist, wenn die Gehäusekonstruktion aus der Richtung der vorderen Öffnung her angesehen wird.

23. Gehäusekonstruktion nach Anspruch 1,
**dadurch gekennzeichnet, daß**
eine zweite Öffnung (44) in dem unteren Wandabschnitt vorgesehen ist und eine Trägereinheit (42, 252, 380, 442) in jeder Öffnung aufgenommen wird, wobei die Trägereinheit so entsprechend der Form der Öffnung geformt ist, daß sie i.w. die Öffnung ausfüllt, in der sie aufgenommen wird und einen Körper umfaßt, daß eine Befestigungseinrichtung vorgesehen ist, um den Körper in der jeweiligen Öffnung zu befestigen, und Halteinrichtungen, die eine Leuchte, eine Steuerung oder ein Instrument auf dem Körper lagern und in den Innenraum hereinragen, wobei die herausnehmbare Einrichtung den Ausbau jeder Trägereinheit aus der jeweiligen Öffnung und den unteren Wandabschnitt ermöglicht, damit die Leuchte, die Steuerung oder das Instrument zugänglich sind, wenn die Einheit ausgebaut ist.

24. Gehäusekonstruktion nach Anspruch 23,
**dadurch gekennzeichnet, daß**
der Körper ferner einen elektrischen Schalter (140, 140') aufweist und eine Verdrahtungseinrichtung (192, 370), die sich zumindest teilweise in den Raum erstreckt und den Schalter zwischen der Lampe und einer Stromquelle anschließt.

25. Gehäusekonstruktion nach Anspruch 23,
**dadurch gekennzeichnet, daß**
der Körper eine Aussparung (68, 264) zur Aufnahme der Linsen aufweist, welche die Lichtöffnung umgibt.

26. Gehäusekonstruktion nach Anspruch 25,
**dadurch gekennzeichnet, daß**
die Lichtöffnung (64, 258) Aussparungen bezüglich der Außenfläche des Körpers aufweist.

27. Gehäusekonstruktion nach Anspruch 23,
**dadurch gekennzeichnet, daß**
eine Lampenfassungseinrichtung vorgesehen ist, die ein Paar mit Abstand angeordneter, elastischer Halteelemente (114) zum lösbaren Halten der Lampe und eines Lampensockels auf der Lampenfassungseinrichtung aufweist.

28. Gehäusekonstruktion nach einem der Ansprüche 23 bis 27,
**dadurch gekennzeichnet, daß**
der Körper eine Steuereinheit (454, 458) aufweist, die auf der Haltevorrichtung zur Steuerung des Betriebs eines Instruments, das in dem Gehäuse angebracht ist, vorgesehen ist, wobei die Steuereinheit ein Steuerelement (452, 456) umfaßt, das sich von dem Körper erstreckt, damit es von dem Boden der Gehäusekonstruktion her zugänglich ist.

29. Gehäusekonstruktion nach Anspruch 28,
**dadurch gekennzeichnet, daß**
eine Kompaßvorrichtung (432) zur Bestimmung der Kursposition der Gehäusekonstruktion und eine Anzeigevorrichtung (434) zur Anzeige des Kurses, der von der Kompaßvorrichtung ermittelt wurde, vorgesehen sind und daß die Steuereinheit (458) Ausgleichssteuerungsvorrichtungen (456) zur Einstellung der Kompaßvorrichtung aufweist.

30. Gehäusekonstruktion nach einem der Ansprüche 23 bis 29,
**dadurch gekennzeichnet, daß**
das Gehäuse ein Paar aufrechtstehender Rippen (48, 50) auf der Innenfläche des unteren Wandabschnitts aufweist, der an gegenüberliegende Seiten jeder Öffnung angrenzt, daß die Befestigungseinrichtung einen Stützflansch (76) umfaßt, der sich von einem Ende des Körpers nach außen erstreckt und mit einer der Rippen in Eingriff ist, und zumindest einen elastischen Flanschvorsprung (78), der sich von dem anderen Ende des Körpers erstreckt und mit der anderen Rippe in Eingriff ist, und daß die herausnehmbare Einrichtung eine Schlitzeinrichtung (80) aufweist, die an den elastischen Vorsprung angrenzt, zum Einführen eines Werkzeugs, um den Vorsprung für den Ausbau des Haltevorrichtung aus dem Gehäuse umzubiegen.

31. Gehäusekonstruktion nach Anspruch 30,
**dadurch gekennzeichnet, daß**
sie ein Paar Halteflansche (54) auf der Innenseite der Gehäuserückwand aufweist, wobei die Halteflansche jeweils mit Abstand über einer der Öffnungen angeordnet sind und sich über dieser einen Öffnung erstrecken, daß der Körper mit dem Halteflansch in Eingriff ist, um die Haltevorrichtung bündig mit dem unteren Wandabschnitt zu halten, daß das Gehäuse eine Einfassung (26) aufweist, um ein Spiegelelement über der vorderen Öffnung des Gehäuses zu halten, und der Körper auch einen Flansch (89) aufweist, der mit einem Teil der Einfassung in Eingriff ist, um den Körper bündig mit dem unteren Wandabschnitt zu halten.

32. Gehäusekonstruktion nach einem der Ansprüche 23 bis 28,
**dadurch gekennzeichnet, daß**
eine der Trägereinheiten eine durch sie verlaufende Öffnung (64, 258) und eine Leuchtvorrichtung (92, 282) aufweist, die auf ihr gelagert ist, um Licht durch die Öffnung und aus dem Gehäuse heraus zu richten.

33. Gehäusekonstruktion nach Anspruch 32,
**dadurch gekennzeichnet, daß**
die andere Trägereinheit auch eine Öffnung (64, 258) und eine Leuchtvorrichtung (92, 282) aufweist, die auf ihr angeordnet ist, um Licht durch die Öffnung und aus dem Gehäuse heraus zu richten, und zumindest eine der Trägereinheiten auch einen elektrischen Schalter (140, 140' ) aufweist, der an mindestens einer der Leuchtvorrichtungen angeschlossen ist und so gelagert ist, daß er von der Außenseite einer der Trägereinheiten her zugänglich ist.

34. Gehäusekonstruktion nach Anspruch 32,
**dadurch gekennzeichnet, daß**
die andere Trägereinheit eine Steuereinheit (454, 458) für die Steuerung des Betriebs eines Instruments, das in dem Gehäuse angebracht ist, aufweist, wobei die Steuereinheit ein Steuerelement (452, 456) umfaßt, das sich von der Einheit erstreckt, um von der Unterseite der Gehäusekonstruktion her zugänglich zu sein.

35. Gehäusekonstruktion nach Anspruch 1,
**dadurch gekennzeichnet, daß**
die umlaufende Seitenwand seitliche Enden aufweist, und daß die Trägereinrichtung Leuchteinrichtungen (90, 278) aufweist, um an die Konstruktion angrenzende Bereiche zu beleuchten, und Lichtrichtungseinrichtungen, um das Licht von der Leuchteinrichtung zur Beleuchtung eines Bereichs unter und außerhalb eines seitlichen Endes des Gehäuse mit einer vorbestimmten Lichtmenge zu richten, wobei der Bereich einen kleineren Zielbereich umfaßt, der i.w. so gerichtet und positioniert ist, daß die Schoßgegend einer Person ausgeleuchtet wird, die auf einem Vordersitz eines Fahrzeugs sitzt, wobei die Gehäusekonstruktion in der normalen Fahrersichtposition im allgemeinen über dem Armaturenbrett des Fahrzeugs angebracht ist.

36. Gehäusekonstruktion nach Anspruch 35,
**dadurch gekennzeichnet, daß**
die Lichtrichtungsvorrichtung Einrichtungen zum Richten des Lichts von der Leuchtvorrichtung umfaßt, um einen zweiten Bereich unterhalb und außerhalb des anderen seitlichen Endes des Gehäuses mit einer vorbestimmten Lichtmenge auszuleuchten, wobei der zweite Bereich einen zweiten kleineren Zielbereich umfaßt, in dem das Licht heller und intensiver ist, wobei der zweite Zielbereich so gerichtet und positioniert ist, daß i.w. die Schoßgegend einer zweiten Person, die auf einem Vordersitz des Fahrzeugs sitzt, ausgeleuchtet ist.

37. Gehäusekonstruktion nach Anspruch 36,
    **dadurch gekennzeichnet, daß**
    die Beleuchtungseinrichtung eine Leuchtvorrichtung (90, 278) umfaßt, die an der Unterseite des Spiegelgehäuses angebracht ist, und die Lichtrichtungseinrichtung einen Reflektor (120, 120') und eine Linse (150, 170, 250, 386) umfaßt, die auf der Leuchtvorrichtung und unterhalb einer Lichtquelle (132, 132') in der Vorrichtung angebracht ist.

38. Gehäusekonstruktion nach Anspruch 37,
    **dadurch gekennzeichnet, daß**
    die Beleuchtungseinrichtung eine zweite Leuchtvorrichtung (90, 278) aufweist, die mit Abstand zu der ersten Leuchtvorrichtung angeordnet ist, die an der Unterseite des Spiegelgehäuses angebracht ist, und daß die Lichtrichtungseinrichtung einen zweiten Reflektor (120, 120') und eine zweite Linse (150, 170, 350, 386) aufweist, die auf der zweiten Leuchtvorrichtung und unterhalb einer zweiten Lichtquelle (132, 132') in der Vorrichtung angebracht ist.

39. Gehäusekonstruktion nach Anspruch 38,
    **dadurch gekennzeichnet, daß**
    die Beleuchtungseinrichtung eine dritte Leuchtvorrichtung (300) umfaßt, die an der Unterseite des Spiegelgehäuses angebracht ist, wobei die dritte Leuchtvorrichtung eine separate Lichtrichtungsvorrichtung (330, 340) aufweist, um das Licht in Richtung eines Bereiches zwischen den Zielbereichen zu richten.

40. Gehäusekonstruktion nach Anspruch 39,
    **dadurch gekennzeichnet, daß**
    die Lichtrichtungsvorrichtung das Licht so richtet, daß der erste und zweite Bereich sich in einem Bereich zwischen den Zielbereichen überlappen.

Fig. 1.

Fig. 2.

Fig. 3.

Fig. 4

Fig. 5.

Fig. 52.

Fig. 6.

Fig. 7.

Fig. 9.

Fig. 8.

Fig. 10.

Fig. 11.

Fig. 12.

Fig. 13.

Fig. 14.

Fig. 15.

Fig. 16.

Fig. 17.

Fig. 18.

Fig. 19.

Fig. 20

Fig. 22.

Fig. 23.

Fig. 24.

Fig. 25.

Fig. 26.

Fig. 27.

**Fig.21.**

**Fig.53.**

**Fig 38**

**Fig.39.**

**Fig.41.**

**Fig.40.**

EP 0 254 435 B1

Fig.28.

Fig. 29.

Fig.30.

Fig. 31.

Fig. 32.

Fig. 33

Fig. 35.

Fig .34

31

*Fig.42.*

*Fig.43.*

*Fig.45.*

*Fig.44.*

*Fig.47.*

*Fig.48.*

*Fig.49.*

*Fig.50.*

*Fig.46.*

*Fig.36.*

*Fig.37.*

Fig. 51.